# EUROPÄISCHE PATENTSCHRIFT

(11) **EP 1 761 764 B1**
(45) Veröffentlichungstag und Bekanntmachung des Hinweises auf die Patenterteilung: **07.04.2010**
(21) Anmeldenummer: 05767784.1
(22) Anmeldetag: 27.06.2005
(51) Int. Cl.: G01N 27/42, C12Q 1/68

(54) **MONOLITHISCH INTEGRIERTE HYBRIDISIERUNGS-SENSOR-ANORDNUNG UND VERFAHREN ZU DEREN HERSTELLUNG**
MONOLITHICALLY INTEGRATED HYBRIDISATION SENSOR ASSEMBLY AND ASSOCIATED PRODUCTION METHOD
DISPOSITIF CAPTEUR D'HYBRIDATION MONOLITIQUEMENT INTEGRE ET PROCEDE DE FABRICATION ASSOCIE

(30) Priorität: 29.06.2004 DE 102004031371
(43) Veröffentlichungstag der Anmeldung: 14.03.2007
(73) Patentinhaber: SIEMENS AKTIENGESELLSCHAFT, 80333 München (DE)
(72) Erfinder: AUGUSTYNIAK, Marcin, 85356 Freising (DE); PAULUS, Christian, 82362 Weilheim (DE)
(86) Internationale Anmeldenummer: PCT/DE2005/001139
(87) Internationale Veröffentlichungsnummer: WO 2006/000204

(56) Entgegenhaltungen:
- DE-A1- 10 112 778
- SCHIENLE M ET AL: "A fully electronic DNA sensor with 128 positions and in-pixel A/D conversion" 2004 IEEE INTERNATIONAL SOLID-STATE CIRCUITS CONFERENCE (IEEE CAT. NO.04CH37519) IEEE PISCATAWAY, NJ, USA, Bd. 1, Februar 2004 (2004-02), Seiten 220-524 Vol.1, XP002352039 ISBN: 0-7803-8267-6
- PAULUS C ET AL: "A fully integrated CMOS sensor system for chronocoulometry" PROCEEDINGS OF IEEE SENSORS 2003 (IEEE CAT. NO.03CH37498) IEEE PISCATAWAY, NJ, USA, Bd. 2, 2003, Seiten 1329-1332, XP010690994 ISBN: 0-7803-8133-5
- HARTWICH G.; WIDER H.: "DNA-Chips mit direkter elektrischer Detektion der Hybridisierung (in: Elektronenübertragung in Chemie und Biochemie, GdCh-Monographie 23)" 2002, GDCH , DE , XP002352041 ISBN: 3-936028-03-6 in der Anmeldung erwähnt Absatz [002.]; Abbildungen 2-4

## Beschreibung

Die Erfindung betrifft eine monolithisch integrierte Sensor-Anordnung, ein Sensor-Array und ein Verfahren zum Herstellen einer monolithisch integrierten Sensor-Anordnung.

Mit einem elektrochemischen Analyseverfahren können Stoffe aufgrund bestimmter physikalischer Eigenschaften unter Ausnutzung des elektrischen Stromes sowohl qualitativ als auch quantitativ bestimmt werden. Von besonderer Bedeutung sind elektrochemische Analyseverfahren bei denen Elektrodenreaktionen eine Rolle spielen. Diese werden, je nachdem ob das Anregungssignal (Strom, Spannung oder Potential) konstant gehalten wird, in zwei Gruppen eingeteilt. Beispielsweise sind die Potentiometrie, Chronopotentiometrie, Coulometrie, Amperometrie, Chronoamperometrie und Chronocoulometrie Techniken, bei denen das Anregungssignal konstant gehalten wird. In voltammetrischen und polarographischen Verfahren wird das Anregungssignal variiert.

Gemeinsam mit optischen Verfahren sind derartige elektrochemische Analyseverfahren zur analytischen Bestimmung von chemischen und biochemischen Substanzen durch eine hohe Empfindlichkeit sowie eine hohe Selektivität gekennzeichnet. Während jedoch bei optischen Analyseverfahren aufwendige, teuere und empfindliche optische und optoelektronische Geräte notwendig sind, kommen elektrochemische Analyseverfahren mit vergleichsweise einfachen Elektrodenvorrichtungen aus. Ein entscheidender Vorteil elektrochemischer Analyseverfahren ist das direkte Vorliegen des Messergebnisses als elektrisches Signal. Dieses kann nach einer Analog-Digital-Wandlung direkt von einem Computer, vorzugsweise von einem Personalcomputer, weiterverarbeitet werden.

Elektrochemische Analyseverfahren eignen sich zur qualitativen wie quantitativen Messung von Stoffkonzentrationen in einer Elektrolytlösung. Jeder Stoff weist eine für ihn charakteristische Oxydationsspannung bzw. Reduktionsspannung auf. Anhand dieser Spannungen kann zwischen verschiedenen Stoffen unterschieden werden. Ferner kann aufgrund des während einer Reaktion geflossenen elektrischen Stromes auf die Konzentration eines vorliegenden Stoffes geschlossen werden.

Ein elektrochemisches Experiment erfordert mindestens zwei Elektroden, die mit dem zu analysierenden Stoff in elektrolytischer Lösung in Verbindung stehen (Arbeits-Elektrode, Gegen-Elektrode). Es können jedoch auch mehrere Arbeits-Elektroden parallel verwendet werden. Zur exakten Kontrolle des Elektrolytpotentials wird zumeist noch eine Referenz-Elektrode eingesetzt. Dieses mindestens drei Elektroden aufweisende System wird mit einem Potentiostaten verbunden, der die Regelung,des Potentials an der Arbeits-Elektrode ermöglicht und den durch die Arbeits-Elektrode fließenden elektrischen Strom misst.

Bei der Voltammetrie wird an die Arbeits-Elektrode eine veränderliche Spannung angelegt und der bei einer Oxydation oder Reduktion fließende Strom gemessen. Im Spezialfall der Cyclovoltammetrie wird ein bestimmter Spannungsbereich wiederholt derart überstrichen, dass die Inhaltsstoffe des Elektrolyten mehrmals hintereinander oxydiert und reduziert werden.

Bei der Chronoamperometrie wird an die Arbeits-Elektrode sprunghaft eine definierte Spannung angelegt und der fließende Strom über die Zeit aufgezeichnet. Diese Meßmethode erlaubt die Analyse eines bestimmten Stoffes durch die gezielte Oxydation oder Reduktion dieses Stoffes. Der geflossene Strom ist ein Maß für die je Zeiteinheit umgesetzte Stoffmenge und lässt Rückschlüsse auf die Konzentration des Stoffs und auf die Diffusionskonstante zu.

Die Chronocoulometrie entspricht in den elektrischen Randbedingungen der Chronoamperometrie. Im Unterschied dazu wird jedoch nicht der geflossene elektrische Strom, sondern die insgesamt geflossene elektrische Ladung aufgezeichnet.

In der Ausgestaltung als Sensoren können Elektrodenvorrichtungen in verschiedenen elektrochemischen Analyseverfahren eingesetzt werden. Entscheidend ist lediglich, dass beim Sensorereignis elektrochemisch auswertbare Stoffe erzeugt werden. Bei Sensoren zur Detektion von Biomolekülen bedient man sich beispielsweise eines Markierungsverfahrens, das im Falle eines Sensorereignisses elektrochemisch aktive Stoffe bereitstellt.

Miniaturisierte elektrochemische Elektrodensysteme zur Analyse chemischer und biochemischer Substanzen sind im Stand der Technik bekannt, siehe zum Beispiel [1], [2], [3], [4] und [5]. Die Elektroden derartiger Arrays können am Rande des Substrats einzeln kontaktiert und mittels eines Potentiostaten betrieben werden. Um zudem Elektrodenarrays zu realisieren, die beispielsweise 100 oder mehr Elektroden aufweisen, sind Schaltfunktionen auf dem Substrat vorteilhaft, welche die Elektroden auf gemeinsame Anschlussleitungen multiplexen. Ist das Substrat ein Halbleitermaterial wie Silizium, können die notwendigen Schalter durch MOS-Transistoren realisiert werden, wie in [6] beschrieben. Aufgrund der dadurch erreichbaren Parallelisierung der Tests wird die Analysezeit wesentlich verkürzt und auch die Durchführung komplexer Analysen möglich.

In [7] ist das so genannte EDDA-Verfahren (Electrically Detected Displacement Assay-Verfahren) der Firma Friz BIOCHEM^{™} beschrieben.

In [8] wird ein Elektrodensystem zum Detektieren von Molekülen oder Molekülkomplexen beschrieben. Die Anordnung enthält wenigstens drei Elektroden, wobei wenigstens eine Arbeitselektrode, eine Gegenelektrode und eine Referenzelektrode vorhanden sind. Die Referenzelektrode ist derart angeordnet, dass sie zumindest Teilbereichen der zwei weiteren Elektroden benachbart ist. Weiterhin enthält eine in [8] beschriebene Elektroden-Anordnung mehrere in ein Substrat integrierte Operationsverstärker zum Auswerten eines Sensorsignals, welche Operationsverstärker die Messsignale an externe Auswertungseinheiten liefern.

In [9] wird ein Biosensor zum Erfassen von makromolekularen Biopolymeren beschrieben. In dem Biosensor ist eine Elektrodenanordnung ausgebildet, welche mindestens eine Einheit zur Immobilisierung von makromolekularen Biopolymeren aufweist. Die mindestens eine Einheit ist dabei mit Fängermolekülen versehen. Ferner ist die mindestens eine Einheit derart eingerichtet, dass ein zu untersuchendes Medium, welches zu erfassende Biopolymere enthält, mit der Einheit zum Immobilisieren in Kontakt gebracht werden kann. In der zu untersuchenden Probe enthaltene Biopolymere können an den Fängermolekülen gebunden werden, wodurch Komplexe aus Biopolymeren und Fängermolekülen gebildet werden. Zum Erfassen der Biopolymere mit Hilfe des Biosensors wird eine erste elektrische Messung durchgeführt. Anschließend werden die Komplexe getrennt werden und es wird eine zweite elektrische Messung durchgeführt. Die Biopolymere werden mittels einer Veränderung des Wertes der elektrischen Messung, der durch die Trennung der Komplexe bewirkt wird, erfasst.

In [10] wird ein DNA-Sensor beschrieben, welcher eine Elektrodenanordnung mit Interdigitalstruktur aufweist. Die Interdigitalstruktur hat dabei zusätzliche Reaktionsflächen zur Anlagerung von Thiolen. Beim Betrieb des in [10] beschriebenen Sensors werden an die von Thiolen bedeckten Flächen so genannte Marker angebracht.

In [11] wird eine Elektrodenanordnung zum Detektieren von makromolekularen Biopolymeren beschrieben, welche mindestens eine Einheit zum Immobilisieren von Biopolymeren aufweist. Die mindestens eine Einheit zum Immobilisieren von makromolekularen Biopolymeren wird mit Fängermolekülen versehen, wobei die Fängermoleküle zum einen makromolekulare Biopolymere binden können, und zum anderen eine Markierung aufweisen, die ein detektierbares Signal erzeugen kann.

In [12] ist ein Schaltkreis zum Integrieren eines elektrischen Stromes (current integrator) beschrieben, welcher Schaltkreis unter anderem einen Operationsverstärker aufweist.

In [13] ist ein Schaltkreis zum Gleichrichten einer Wechselspannung beschrieben. Dabei wird ein Kondensator während einer positiven Halbschwingung der Wechselspannung über eine in Durchlassrichtung geschaltete Diode aufgeladen. Während der negativen Halbschwingung sperrt die Diode, und die am Kondensator anliegende Spannung bleibt näherungsweise konstant.

Aus Sicht der Miniaturisierung, der Signalintegrität sowie der Messempfindlichkeit stellen die im Stand der Technik bekannten aktiven Mikroarrays sehr gute elektrochemische Analysesysteme dar [2]. Derartige elektrochemische Sensor-Arrays, die gemäß voltammetrischer, (chrono-)amperometrischer und (chrono-) coulometrischer Verfahren arbeiten, werden gemäß der CMOS-Technologie gefertigt und mit auf der Chipoberfläche zugänglichen Elektroden aus einem Edelmetall (z.B. Gold) ausgestattet.

Aktive Sensor-Arrays sind beispielsweise bei DNA-Sensorchips verwirklicht worden, bei denen auf Basis des Redox-Cycling DNA-Moleküle an Oberflächen elektronisch durch Erfassen von mittels redoxaktiven Stoffen erzeugten elektrischen Ladungsträgern nachgewiesen werden. Das Redox-Cycling stellt einen Spezialfall eines amperometrischen Verfahrens dar (Oxidations/Reduktionsspannungen konstant, Messungen des Elektrodenstroms).

Eine typische Redox-Cycling-Sensor-Anordnung weist zwei auf einem Substrat ausgebildete Gold-Elektroden auf. Auf jeder Elektrode sind beispielsweise über die sogenannte Gold-Schwefel-Kopplung immobilisierte einzelsträngige DNA-Fängermoleküle mit einer vorgegebenen Sequenz immobilisiert. Die gegebenenfalls in der Analyselösung vorliegenden komplementären und damit zur Hybridisierung befähigten einzelsträngigen DNA-Zielmoleküle weisen eine Markierung auf. Mittels dieser Markierung wird bei Anwesenheit geeigneter Zusatzmoleküle ein Zyklus aus Oxydation und Reduktion von Bestandteilen der Zusatzmoleküle ausgelöst, der unter Wechselwirkung mit den Elektroden zur Bildung reduzierter bzw. oxydierter Moleküle führt. Der Zyklus aus Oxidationen und Reduktionen führt zu einem elektrischen Kreisstrom, der einen Nachweis der DNA-Zielmoleküle ermöglicht.

Sowohl bei dieser Redox-Cycling-Sensor-Anordnung als auch bei den zuvor genannten elektrochemischen Analyseverfahren ist stets eine Gegen-Elektrode erforderlich. Während bei den Redox-Cycling-Sensoren jedoch nur ein relativ kleiner Gleichstrom an den Elektroden abgeführt werden muss, muss bei den meisten der oben angegebenen elektrochemischen Analyseverfahren ein vergleichsweise hoher Stoßstrom durch die Gegen-Elektrode geliefert werden können. Aus diesem Grund muss die Fläche der Gegen-Elektrode wesentlich größer sein als die der aktiven Arbeits-Elektroden. In Abhängigkeit vom konkreten Analyseverfahren ist für die Gegen-Elektrode regelmäßig eine etwa 10-fach größere Oberfläche in Bezug auf die Summe der Oberflächen der einzelnen Arbeits-Elektroden zu fordern. Das ist notwendig, weil bei einer zu kleinen Fläche der Gegen-Elektrode die an ihr anliegende Spannung bei einem Experiment zur Bereitstellung der erforderlichen Ladungsträger extrem hohe Werte annehmen kann. Sofern derartig hohe Werte angenommen werden, können unkontrolliert ablaufende chemische Umsetzungen, z.B. des Elektrodenmaterials die Folge sein, die typischerweise unter Bildung von Gasen erfolgen.

Ist die Oberfläche der Gegen-Elektrode groß genug, ist sie in der Lage, das Elektrolytpotential größtenteils durch die Doppelschichtkapazität zu stabilisieren. Elektrochemische Umsetzungen finden nur mit vergleichsweise niedrigen Stromdichten statt.

Da ein aktiver Siliziumchip als Substrat z.B. für einen DNA-Sensor vergleichsweise teuer ist, wird im allgemeinen eine möglichst hohe Packungsdichte der Einzelsensoren im Array angestrebt. Wegen der Packungsdichte der Sensoren und damit der Elektroden kann im Bereich des Sensor-Arrays unter Umständen keine Gegen-Elektrode realisiert werden. Die Gegen-Elektrode kann dann als externe Elektrode ausgeführt sein, die im Probenvolumen angeordnet und mit dem Sensorchip elektrisch verbunden ist. Die Ansteuerung dieser Elektrode kann von einem Potentiostaten übernommen werden. Wegen vergleichsweise langer Zuleitungen und dem aufwendigeren mechanischen Aufbau ist diese Vorgehensweise allerdings nachteilhaft. Sofern die damit verbundenen Nachteile vermieden werden sollen, bietet der Stand der Technik als Lösung lediglich an, dass die Gegen-Elektrode in der Peripherie des Arrays realisiert wird, was jedoch zusätzliche (teuere) Chipfläche erfordert.

Ein wichtiger Sensortyp, insbesondere bei vollelektronischen DNA-Sensorchips, basiert auf dem sogenannten Redox-Cycling. Grundlagen des Redox-Cycling sind in [3], [4] beschrieben. Beim Redox-Cycling werden makromolekulare Biopolymere an Oberflächen elektronisch durch Erfassen von mittels redoxaktiven Markierungen hervorgerufenen elektrischen Strömen nachgewiesen.

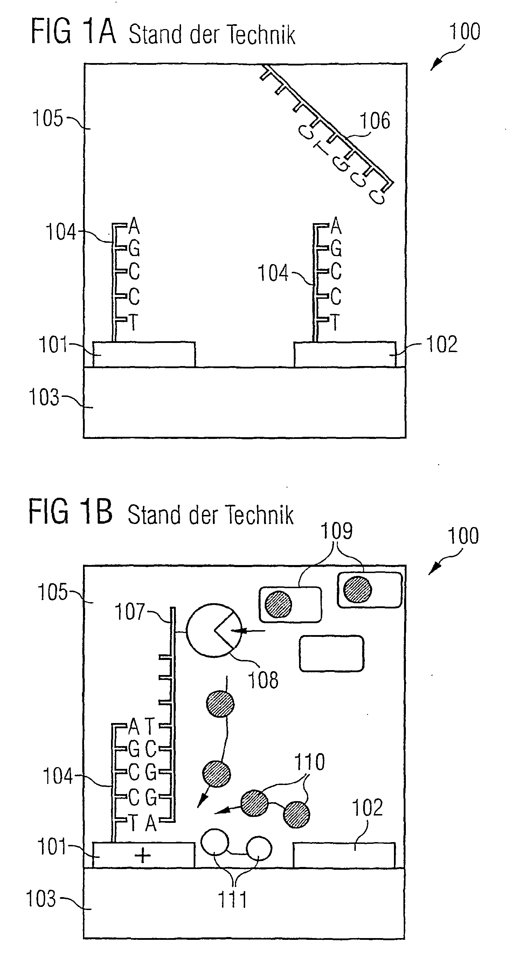

**Fig.1A, Fig.1B** zeigen eine Redox-Cycling-Sensor-Anordnung 100 gemäß dem Stand der Technik.

Die Redox-Cycling-Sensor-Anordnung 100 weist zwei Gold-Arbeits-Elektroden 101, 102 auf, die auf einem Substrat 103 gebildet sind. Auf jeder Arbeits-Elektrode 101, 102 sind DNA-Fängermoleküle 104 mit einer vorgegebenen Sequenz immobilisiert. Die Immobilisierung erfolgt beispielsweise gemäß der sogenannten Gold-Schwefel-Kopplung. Ferner ist in die Redox-Cycling-Sensor-Anordnung 100 ein zu untersuchender Analyt 105 eingebracht. Der Analyt 105 kann beispielsweise eine elektrolytische Lösung mit unterschiedlichen DNA-Molekülen sein.

Sind in dem Analyt 105 erste DNA-Halbstränge 106 mit einer Sequenz enthalten, die zu der Sequenz der DNA-Fängermoleküle 104 nicht komplementär ist, so hybridisieren.diese ersten DNA-Halbstränge 106 nicht mit den DNA-Fängermolekülen 104 (siehe Fig.1A). Man spricht in diesem Fall von einem "Mismatch".

Sind in dem Analyt 105 dagegen zweite DNA-Halbstränge 107 mit einer Sequenz enthalten, die zu der Sequenz der DNA-Fängermoleküle 104 komplementär ist, so hybridisieren diese zweiten DNA-Halbstränge 107 mit den DNA-Fängermolekülen 104. Man spricht in diesem Fall von einem "Match". Anders ausgedrückt ist ein DNA-Halbstrang 104 einer vorgegebenen Sequenz jeweils nur in der Lage, selektiv mit einem ganz bestimmten DNA-Halbstrang zu hybridisieren, nämlich mit dem DNA-Halbstrang mit zu dem jeweiligen Fängermolekül komplementärer Sequenz.

Wie in Fig.1B gezeigt, enthalten die zu erfassenden zweiten DNA-Halbstränge 107 eine redoxaktive Markierung 108. Nach der Hybridisierung der zu erfassenden zweiten DNA-Halbstränge 107 mit den DNA-Fängermolekülen 104 wird mittels der redoxaktiven Markierung 108 (z.B. ein Enzym-Label wie z.B. eine alkalische Phosphatase) bei Anwesenheit geeigneter Zusatzmoleküle 109 (zum Beispiel para-Aminophenylphosphat, p-APP), ein Zyklus aus Oxidationen und Reduktionen von Bestandteilen der Zusatzmoleküle 109 ausgelöst, der unter Wechselwirkung mit den Gold-Elektroden 101, 102 zum Bilden reduzierter Moleküle 110 (z.B. para-Aminophenol) bzw. oxidierter Moleküle 111 (z.B. Chinonimin) führt. Der Zyklus aus Oxidationen und Reduktionen führt zu einem elektrischen Kreisstrom, der einen Nachweis der zweiten DNA-Halbstränge 107 ermöglicht.

Bei dem Redox-Cycling-Verfahren wird somit im Falle eines Bindungsereignisses zwischen einem zu erfassenden Molekül und einem Fängermolekül mittels eines Enzymlabels (z.B. einer alkalischen Phosphatase) eine redoxaktive Spezies erzeugt, indem zum Beispiel in einem Elektrolyten enthaltenes para-Aminophenylphosphat (p-APP)) in para-Aminophenol umgewandelt wird. Da laufend neue redoxaktive Spezies generiert werden, führt dies zu einem Anstieg des elektrischen Stroms zwischen den beiden Elektroden.

An der ersten Arbeits-Elektrode 101, die auch als Generatorelektrode bezeichnet werden kann, ist ein oxidierendes elektrisches Potential erforderlich. An der zweiten Arbeits-Elektrode 102, die auch als Kollektorelektrode bezeichnet werden kann, ist ein reduzierendes elektrisches Potential erforderlich.

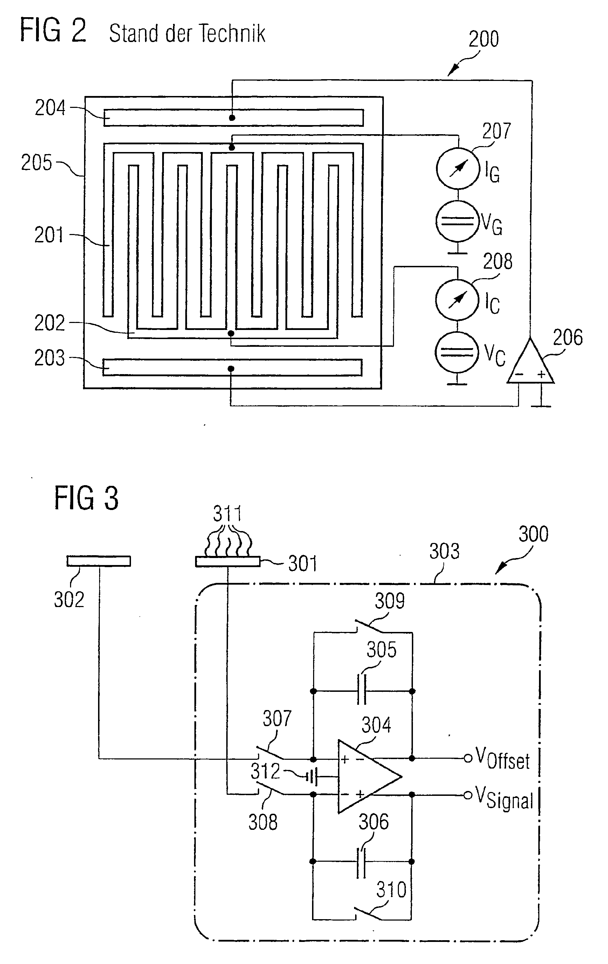

In **Fig.2** ist eine aus dem Stand der Technik bekannte Interdigitalelektroden-Anordnung 200 gezeigt, die zwei fingerförmig ineinandergreifende Arbeits-Elektroden, nämlich eine Generatorelektrode 201 und eine Kollektorelektrode 202 aufweist. Ferner sind eine Referenz-Elektrode 203 und eine Gegen-Elektrode 204 gezeigt. Die Elektroden 201 bis 204 sind auf einem Substrat 205 gebildet. Auf die Interdigitalelektroden-Anordnung 200 kann ein elektrolytischer Analyt (nicht gezeigt) aufgebracht werden, der mit den Elektroden 201 bis 204 gekoppelt ist. Das elektrische Potential des elektrolytischen Analyten wird mittels der Referenz-Elektrode 203 einem invertierenden Eingang eines Komparators 206 bereitgestellt und von diesem mit einem elektrischen Sollpotential an dem nicht-invertierenden Eingang des Komparators 206 verglichen. Bei einer Abweichung des elektrischen Potentials der Referenz-Elektrode 203 von dem Sollpotential wird über einen Ausgang des Komparators 206 die Gegen-Elektrode 204 derart angesteuert, dass diese bedarfsweise elektrische Ladungsträger nachliefert, um das gewünschte elektrische Potential des Elektrolyten aufrechtzuerhalten. Anschaulich bildet die Referenz-Elektrode 203 gemeinsam mit dem Komparator 207 eine Potentiostat-Einrichtung. Die elektrischen Potentiale an den Arbeits-Elektroden 201, 202 werden relativ zu der Referenzspannung eingestellt. Mittels erster und zweiter Amperemeter 207, 208 werden elektrische Sensorströme der Generatorelektrode 201 bzw. der Kollektorelektrode 202 erfasst, welche Informationen über ein möglicherweise erfolgtes Sensorereignis enthalten.

Aus dem Stand der Technik ist ferner ein Sensor-Array bekannt, bei dem eine Mehrzahl von Interdigital-Elektroden-Anordnungen 200 miteinander beispielsweise matrixförmig verschaltet sind. In diesem können Komponenten 203, 204, 207, 208 für mehrere Sensor-Felder gemeinsam vorgesehen werden.

Es sind Schaltungs-Architekturen für Biosensoren bekannt, die zur empfindlichen Detektion von Biomolekülen mittels elektrochemischer Umsetzungen in Elektrolytlösungen dienen. Dabei wird insbesondere die Hybridisierung zweier komplementärer Oligonukleotide über das Vorhandensein von bekannten elektrochemischen Markierungen (z.B. eine Ferrocen-Markierung) nachgewiesen. Die elektrische Messung der auf der Oberfläche der Sensor-Elektrode vorhandenen elektrochemischen Markierungen erfolgt mittels einer sprunghaften Änderung der Elektrodenspannung. Dabei werden die Markierungen gezielt oxidiert oder reduziert. Der Wert des dabei auftretenden Stromes ist ein Maß für die Menge der vorhandenen Markierung auf der Sensoroberfläche. Der Stromstoß bzw. die Ladungsmenge setzt sich dabei zusammen aus elektrischen Ladungen, die in die Doppelschichtkapazität an der Elektrodenoberfläche fließen und den Ladungen, die aus Oxidations- und Reduktionsprozessen hervorgehen.

Gemäß dem Stand der Technik wird an einer Sensor-Elektrode ein Absolutwert einer bei einem Spannungsstoß auftretenden elektrischen Ladungsmenge gemessen. Hierbei ist nachteilig, dass auch große Mengen solcher elektrischer Ladungsträger unerwünschterweise erfasst werden, die nicht zum Messsignal beitragen und somit den Signal-Stör-Abstand verschlechtern.

In [14] ist ein ein Redox-Cycling-Verfahren verwendender vollelektronischer DNA-Sensor-Array-Chip beschrieben, wobei die einzelnen Sensoren des Arrays jeweils eine Elektrodenanordnung mit Interdigitalstruktur sowie eine Potentiostaten-Schaltung aufweisen. Der DNA-Sensor weist 128 Sensor-Positionen auf, wobei eine Analog-Digital-Wandlung des jeweiligen Sensor-Signals in jedem einzelnen Pixel erfolgt. Der Chip wird unter Verwendung eines CMOS-Prozesses realisiert.

Der Erfindung liegt insbesondere das Problem zugrunde, eine Sensor-Anordnung bereitzustellen, die gegenüber dem Stand der Technik eine verbesserte Nachweisempfindlichkeit hat und ein verbessertes Signal-zu-Rausch-Verhältnis aufweist.

Dieses Problem wird durch eine monolithisch integrierte Sensor-Anordnung, durch ein Sensor-Array und durch ein Verfahren zum Herstellen einer monolithisch integrierten Sensor-Anordnung mit den Merkmalen gemäß den unabhängigen Patentansprüchen gelöst.

Die erfindungsgemäße monolithisch integrierte Sensor-Anordnung zum Erfassen von in einem Analyten möglicherweise enthaltenen Molekülen enthält ein Substrat, mindestens eine auf und/oder in dem Substrat angeordnete Sensor-Elektrode, die mit einer sensoraktiven Schicht beschichtet ist, an welcher in Anwesenheit von zu erfassenden Molekülen elektrochemisch aktive Teilchen (z.B. redoxaktive Teilchen, elektrisch geladene Teilchen) generiert werden, die mittels Erfassens eines elektrischen Sensor-Signals an der mindestens einen Sensor-Elektrode erfassbar sind, mindestens eine auf und/oder in dem Substrat angeordnete zusätzliche Elektrode, mindestens eine Vergleichs-Elektrode, an der ein von dem Sensor-Signal unabhängiges elektrisches Vergleichs-Signal erfassbar ist, und eine auf und/oder in dem Substrat integrierte Betriebsschaltung zum Ansteuern der mindestens einen Sensor-Elektrode und der mindestens einen zusätzlichen Elektrode, wobei die Betriebsschaltung mindestens eine Auswerte-Einheit aufweist, mittels welcher basierend auf dem Sensor-Signal und dem Vergleichs-Signal ein Sensorereignis an der mindestens einen Sensor-Elektrode ermittelbar ist.

Ferner ist erfindungsgemäß ein Sensor-Array mit einer Mehrzahl von auf und/oder in dem Substrat gebildeten Sensor-Anordnungen mit den oben beschriebenen Merkmalen geschaffen.

Bei einem erfindungsgemäßen Verfahren zum Herstellen einer monolithisch integrierten Sensor-Anordnung zum Erfassen von in einem Analyten möglicherweise enthaltenen Molekülen wird auf und/oder in einem Substrat mindestens eine Sensor-Elektrode gebildet, die mit einer sensoraktiven Schicht beschichtet wird, an welcher in Anwesenheit von zu erfassenden Molekülen elektrochemisch aktive (z.B. redoxaktive Teilchen, elektrisch geladene Teilchen) Teilchen generiert werden, die mittels Erfassens eines elektrischen Sensor-Signals an der mindestens einen Sensor-Elektrode erfassbar sind. Ferner wird mindestens eine zusätzliche Elektrode auf und/oder in dem Substrat gebildet. Es wird mindestens eine Vergleichs-Elektrode gebildet, wobei an der mindestens einen Vergleichs-Elektrode ein von dem Sensor-Signal unabhängiges elektrisches Vergleichs-Signal erfassbar ist. Weiterhin wird auf und/oder in dem Substrat eine Betriebsschaltung zum Ansteuern der mindestens einen Sensor-Elektrode und der mindestens einen zusätzlichen Elektrode integriert, wobei die Betriebsschaltung eine Auswerte-Einheit aufweist, mittels welcher basierend auf dem Sensor-Signal und dem Vergleichs-Signal ein Sensorereignis an der mindestens einen Sensor-Elektrode ermittelbar ist.

Ein Aspekt der Erfindung ist darin zu sehen, dass eine monolithisch integrierte Sensor-Anordnung bereitgestellt wird mit einer Mehrzahl von Elektroden, aufweisend mindestens eine Sensor-Elektrode (d.h. eine Arbeits-Elektrode), eine mit der Arbeits-Elektrode gekoppelte Betriebsschaltung zum Ansteuern der Arbeits-Elektrode sowie zumindest eine zusätzliche Elektrode. Die mindestens eine zusätzliche Elektrode weist eine oder mehrere Vergleichs-Elektroden zum Durchführen einer Vergleichsmessung/Kalibrationsmessung auf, wobei eine Messung an der Sensor-Elektrode mit der Vergleichsmessung mittels des integrierten Betriebsschaltkreises gemeinsam ausgewertet werden kann. Die mindestens eine zusätzliche Elektrode kann auch eine Gegen-Elektrode, zumindest eine Referenz-Elektrode sowie eine Potentiostaten-Schaltung zum Bereitstellen eines vorgegebenen Potentials aufweisen.

Die monolithisch integrierte Sensor-Anordnung ist mit mindestens einer Vergleichs-Elektrode versehen, an der ein elektrisches Vergleichs-Signal erfassbar ist, und die Betriebsschaltung weist mindestens eine Auswerte-Einheit auf, mittels welcher basierend auf dem Sensor-Signal und dem Vergleichs-Signal ein Sensorereignis an der mindestens einen Sensor-Elektrode ermittelbar ist.

Unter einer Vergleichs-Elektrode wird eine Elektrode verstanden, an der ähnlich wie an einer Sensor-Elektrode ein Signal erfassbar ist (z.B. ein von Sensorereignissen unabhängiges Untergrund-, Rausch- oder Nullsignal), das gemeinsam mit einem Sensor-Signal der Sensor-Elektrode (z.B ein von Sensorereignissen abhängiges Signal, das als zusätzliche Komponente ein Untergrund-, Rausch- oder Nullsignal enthalten kann) auswertbar ist (z.B. Differenzbildung zum Eliminieren eines Untergrund-, Rausch- oder Nullsignals).

Unter einer Referenz-Elektrode wird dagegen insbesondere eine Elektrode verstanden, mittels welcher ein Analyt-Potential gemessen werden kann, die also insbesondere in die Funktionalität einer Potentiostat-Schaltung eingebettet sein kann, um das Analyt-Potential konstant zu halten.

Im Gegensatz zum Stand der Technik, gemäß dem die Betriebsschaltung bzw. die Potentiostaten-Schaltung zu der Elektrodenanordnung extern angeordnet und mittels Kabeln mit dieser verbunden ist, ist gemäß diesem Aspekt der Erfindung die Betriebsschaltung bzw. die Potentiostaten-Schaltung in die Sensor-Anordnung monolithisch integriert.

Auf diese Weise werden erfindungsgemäß die aufgrund der gemäß dem Stand der Technik vorhandenen relativ langen elektrischen Zuleitungen (Kabel) auftretenden Störungen (verursacht durch den sogenannten Antenneneffekt) der im Sensor auftretenden und zu erfassenden relativ kleinen elektrischen Ströme erheblich reduziert. Damit sind die mittels der Sensor-Anordnung gemäß diesem Aspekt der Erfindung erreichbare Auflösung und die verarbeitbare Signalbandbreite erheblich erhöht. Ferner ist gemäß diesem Aspekt der Erfindung eine erhöhte Anzahl von Elektrodensystemen (d.h. jeweils zumindest eine Gegen-Elektrode, zumindest eine Referenz-Elektrode sowie mindestens eine Arbeits-Elektrode) gleichzeitig betreibbar.

Ferner kann die monolithisch integrierte Sensor-Anordnung eine oder mehrere digitale Steuereinrichtung(en) und/oder analoge Steuereinrichtung(en) zum Steuern des/der Elektrodensystem(e) aufweisen sowie vorzugsweise periphere Schaltungen, welche ebenfalls alle in die Sensor-Anordnung integriert sind.

Weiterhin ist vorzugsweise die Messelektronik zum Erfassen und Verarbeiten der elektrischen Signale aus den Betriebsschaltungen der Arbeits-Elektroden ebenfalls in die monolithisch integrierte Sensor-Anordnung integriert.

Gemäß einer Ausgestaltung dieses Aspekts der Erfindung ist die Potentiostaten-Schaltung derart eingerichtet und mit der Gegen-Elektrode gekoppelt, dass das vorgegebene Potential als Konstantpotential des Elektrolyten (konstantes Elektrolytpotential) bereitgestellt wird. Die im Rahmen des Sensorbetriebs erforderliche Spannungsänderung wird von der Betriebsschaltung erzeugt und der Arbeits-Elektrode zugeführt.

Bei dieser Methode der Elektrochemie, bei der das Elektrolytpotential im Wesentlichen konstant gehalten wird bezogen auf die Versorgungsspannung des elektronischen Chips, arbeitet die Potentiostaten-Schaltung stets im gleichen Arbeitspunkt, d.h., sie vergleicht die Elektrolytspannung, die ihr von der Referenz-Elektrode bereitgestellt wird, mit einer fest vorgegebenen Referenzspannung und steuert die Gegen-Elektrode derart an, dass das Elektrolytpotential im Wesentlichen konstant bleibt. Die in allen genannten elektrochemischen Experimenten notwendige Spannungsänderung an der Arbeits-Elektrode wird in diesem Fall von der Betriebsschaltung, welche mit der Arbeits-Elektrode gekoppelt ist, gewährleistet. Die Betriebsschaltung bzw. gegebenenfalls die mehreren Betriebsschaltungen erhalten eine zeitlich variable Spannung für die Arbeits-Elektroden und regeln den elektrischen Stromfluss von bzw. zu der oder den Arbeits-Elektroden derart, dass die elektrische Spannung an der Arbeits-Elektrode oder den Arbeits-Elektroden dieser Spannung folgt. Der fließende elektrische Strom stellt das Messsignal dar, das zur Auswertung der elektrochemischen Umsetzungen an der Arbeits-Elektrode bzw. an den Arbeits-Elektroden herangezogen wird. Die Potentiostaten-Schaltung arbeitet autark und stabilisiert das Badpotential, d.h. das elektrische Potential in dem Elektrolyten, auf dem Referenzpotential. Diese Vorgehensweise ist insbesondere dann vorteilhaft, wenn an mehrere unterschiedliche Arbeits-Elektroden, die in einem gemeinsamen Reaktionsvolumen untergebracht sind, unterschiedliche elektrische Potentiale angelegt werden müssen.

Im Rahmen der Voltammetrie wird an die Arbeits-Elektrode eine sich stetig ändernde elektrische Spannung angelegt und der fließende elektrische Strom wird gemessen. Wird die elektrische Spannung wiederholt zwischen zwei Grenzwerten verändert, so bezeichnet man dies als Cyclovoltammetrie. Der an der Arbeits-Elektrode bzw. den Arbeits-Elektroden fließende elektrische Strom wird von einer geeigneten Messelektronik erfasst und weiterverarbeitet.

Im Rahmen der Chronoamperometrie wird das elektrische Potential an der Arbeits-Elektrode sprunghaft auf einen bestimmten vorgegebenen Wert gelegt und der sich aufgrund der stattfindenden Oxidationsprozesse und/oder Reduktionsprozesse zeitlich verändernde Elektrodenstrom wird gemessen.

Im Rahmen der Chronocoulometrie wird anstelle des Elektrodenstroms die geflossene elektrische Ladung an der Arbeits-Elektrode gemessen. Dies kann durch Integration des Elektrodenstroms in einer analogen Integratorschaltung, d.h. mittels eines Kondensators, erfolgen oder durch Digitalisierung des Elektrodenstroms und anschließender digitaler Integration.

Gemäß einer anderen Ausgestaltung dieses Aspekts der Erfindung ist die Potentiostaten-Schaltung derart eingerichtet und mit der Gegen-Elektrode gekoppelt, dass einem ersten Eingang der Potentiostaten-Schaltung das in dem Elektrolyten aktuell herrschende elektrische Potential zugeführt wird und dass einem zweiten Eingang der Potentiostaten-Schaltung die zum Sensorbetrieb erforderliche Spannungsänderung als zeitlich variable elektrische Spannung zugeführt wird und damit das an der Gegen-Elektrode anliegende elektrische Potential zeitlich variabel ausgestaltet ist. Die Betriebsschaltung erzeugt ein elektrisches Potential und führt dieses der Arbeits-Elektrode zu derart, dass das an der Arbeits-Elektrode anliegende elektrische Potential zeitlich im Wesentlichen konstant gehalten wird.

Bei dieser Methode der Elektrochemie, bei dem das elektrische Potential an der Arbeits-Elektrode im Wesentlichen konstant bezogen auf die Versorgungsspannungen des elektronischen Chips, in welchen die monolithisch integrierte Sensor-Anordnung integriert ist, gehalten wird, wird das elektrische Potential an den Arbeits-Elektroden konstant gehalten und das elektrische Potential des Elektrolyten wird verändert.

Dies ist besonders interessant für den Fall, dass alle Arbeits-Elektroden in einem Reaktionsvolumen die gleiche effektive Oxidationsspannung bzw. Reduktionsspannung aufweisen müssen. Somit ist diese Ausgestaltung insbesondere geeignet bei größeren Sensor-Anordnungen mit einer großen Anzahl von Sensorfeldern, in denen jeder einzelne Sensor die Konzentration eines bestimmten, für alle Sensoren gleichen, elektrochemisch aktiven Stoffes nachweist, d.h. diese Ausgestaltung ist insbesondere geeignet für elektrische DNA-Sensoren.

Anschaulich wird gemäß dieser Ausgestaltung an den einen Eingang der Potentiostaten-Schaltung die gewünschte, zeitlich veränderliche Badspannung, d.h. die Spannung des Elektrolyten, angelegt, welche mit dem elektrischen Potential der Referenz-Elektrode verglichen wird. Die gewünschte, zeitlich veränderliche Badspannung wird mittels der Potentiostaten-Schaltung über die Gegen-Elektrode eingestellt. Die Arbeits-Elektrodenschaltungen, d.h. die Betriebsschaltungen, halten die Arbeits-Elektroden bzw. die Arbeits-Elektrode auf einem im Wesentlichen konstanten elektrischen Potential und messen den dazu notwendigen Strom bzw. die notwendige Ladungsmenge.

Die Trennung der Vorrichtung zur Spannungsänderung (d.h. der Potentiostaten-Schaltung) und der Vorrichtung zur Strommessung bzw. Ladungsmessung (d.h. der Betriebsschaltung) vereinfacht das Schaltungsdesign erheblich.

Insbesondere für Experimente, bei denen ein Spannungssprung durchgeführt wird, weist die oben beschriebene Architektur erhebliche Vorteile bezüglich des Zeitverhaltens, der Stabilität sowie der Meßgenauigkeit der Sensor-Anordnung auf.

Im Rahmen der Voltammetrie wird an den Potentiostaten, d.h. an die Potentiostaten-Schaltung, eine sich kontinuierlich ändernde Spannung angelegt. Der Elektrolyt folgt dieser Spannungsänderung aufgrund der entsprechenden Ansteuerung der Gegen-Elektrode mittels der Potentiostaten-Schaltung, und der fließende elektrische Strom an den Arbeits-Elektroden wird gemessen. Wird die elektrische Spannung wiederholt zwischen zwei Grenzwerten verändert, so wird diese Vorgehensweise als Cyclovoltammetrie bezeichnet. Der an der Arbeits-Elektrode fließende elektrische Strom wird von einer geeigneten Messelektronik, welche gegebenenfalls ebenfalls in die Sensor-Anordnung integriert ist, erfasst und weiterverarbeitet.

Im Rahmen der Chronoamperometrie wird das Potential der Potentiostaten-Schaltung sprunghaft auf einen vorgegebenen bestimmten Wert gelegt und der aufgrund der stattfindenden Oxidationsprozesse und/oder Reduktionsprozesse sich zeitlich verändernde elektrische Strom an der Arbeits-Elektrode wird gemessen.

Im Rahmen der Chronocoulometrie wird anstelle des Elektrodenstroms die geflossene elektrische Ladung an der Arbeits-Elektrode gemessen. Dies kann einerseits durch Integration des Elektrodenstroms an einer analogen Integratorschaltung (d.h. mittels eines Kondensators) erfolgen oder durch Digitalisieren des Elektrodenstroms und anschließender digitaler Integration.

Insbesondere bei sehr kleinen Oberflächen der Elektroden ist es vorteilhaft, die Arbeits-Elektroden auf einem konstanten elektrischen Potential bezüglich der Betriebsspannung des elektronischen Chips zu halten und die Spannung des Elektrolyten zu ändern. In diesem Fall bleibt die parasitäre Eingangskapazität der Betriebsschaltung für die Arbeits-Elektroden auf konstantem elektrischen Potential und wird bei einer Spannungsänderung nicht umgeladen. Die parasitäre Eingangskapazität, die bei kleinen Elektroden in der gleichen Größenordnung wie die Doppelschichtkapazität der Elektrode selbst liegt, führt in diesem Fall nicht zu einer Verfälschung des Messergebnisses.

Ein Aspekt der Erfindung kann anschaulich darin gesehen werden, dass ein monolithisch integriertes elektrochemisches Analysesystem für eine sehr empfindliche und hochgradig parallele Detektion elektrochemisch aktiver Spezies mittels Voltammetrie, Chronoamperometrie und/oder Chronocoulometrie bereitgestellt wird.

Insbesondere das oben beschriebene Verfahren des Potentiostatenbetriebs, bei dem das Arbeits-Elektrodenpotential konstant gehalten wird und stattdessen das elektrische Potential des Elektrolyten verändert wird, weist in den oben beschriebenen Fällen erhebliche Vorteile auf.

Ferner ist die erfindungsgemäße Sensor-Anordnung für sogenannte Spannungssprungexperimente aufgrund der geeigneten schaltungstechnischen Maßnahmen mit den in die Sensor-Anordnung monolithisch integrierten elektrischen Schaltungen sehr vorteilhaft, um die Stabilität der Sensor-Anordnung während des Spannungssprungexperiments zu gewährleisten.

Die monolithische Integration von Elektroden und Betriebsschaltung ermöglicht die Realisierung hochdichter, hochempfindlicher Sensor-Arrays unter Einhaltung der für die Spannungssprungexperimente erforderlichen hohen Flankensteilheit.

Bevorzugte Weiterbildungen der Erfindungen ergeben sich aus den abhängigen Ansprüchen.

Bei der monolithisch integrierten Sensor-Anordnung der Erfindung kann die mindestens eine zusätzliche Elektrode zumindest eine Gegen-Elektrode und zumindest eine Referenz-Elektrode aufweisen, und es kann auf und/oder in dem Substrat eine Potentiostatschaltung zum Bereitstellen eines vorgegebenen Potentials integriert sein.

Das Substrat ist vorzugsweise ein Wafer, zum Beispiel ein Silizium-Wafer, insbesondere ein Silizium-Chip, der als CMOS-Chip ausgeführt sein kann. Die Sensor-Anordnung ist gemäß dieser Ausgestaltung monolithisch in dem CMOS-Chip als Substrat integriert.

Insbesondere kann die eine Auswerte-Funktionalität aufweisende Betriebsschaltung der erfindungsgemäßen Sensor-Anordnung monolithisch in dem Substrat integriert sein, so dass die Auswertung von Signalen On-Chip erfolgen kann, wodurch die Signalwege kurz gehalten sind und insbesondere bei kleinen Signalamplituden das Signal nur auf einem kurzen Transportweg einer unerwünschten Schwächung, Dämpfung oder Störung ausgesetzt ist. Dadurch wird die Nachweissensitivität erhöht.

Gemäß einem wichtigen Aspekt der Erfindung wird bei einer Sensor-Anordnung nicht bloß ein einziger Absolutwert eines elektrischen Sensor-Signals an einer Sensor-Elektrode erfasst, sondern es wird zusätzlich an einer Vergleichs-Elektrode ein elektrisches Vergleichs-Signal erfasst, das von einem Sensorereignis unabhängig generiert wird. Somit beinhaltet das Vergleichs-Signal solche Effekte, die von dem Sensorereignis unabhängig sind, und die auch in dem erfassten Sensor-Signal enthalten sein können und somit die Genauigkeit der Messung verringern. Indem die Auswerte-Einheit der erfindungsgemäßen Sensor-Anordnung das Sensor-Signal und das Vergleichs-Signal gemeinsam auswertet, können nicht von dem Sensorereignis stammende Beiträge des Sensor-Signals eliminiert werden, wodurch die Nachweissensitivität erhöht wird, das Signal-Rausch-Verhältnis verbessert wird und somit der Signal-Stör-Abstand erhöht wird.

Das von dem Sensorereignis unabhängige Vergleichs-Signal kann von dem Sensor-Signal abgezogen werden, wobei insbesondere Signalkomponenten, die auf elektrischen Ladungen beruhen, die in eine Doppelschichtkapazität einer Elektrodenoberfläche fließen, eliminiert werden können. Somit ist erfindungsgemäß eine besonders vorteilhafte Schaltungsarchitektur geschaffen, die einen vorteilhaften Betrieb insbesondere von elektrischen Biosensoren ermöglicht, weiter insbesondere den Betrieb von elektrochemischen Biosensoren nach dem Messprinzip der Coulometrie.

Anschaulich ist eine Schaltungs-Anordnung geschaffen, die zur Erfassung eines Messsignals mindestens zwei Elektroden, nämlich mindestens eine Sensor-Elektrode und mindestens eine Vergleichs-Elektrode verwendet. Eine dieser Elektroden wird als Mess-Elektrode oder Sensor-Elektrode eingerichtet bzw. betrieben, d.h. diese Elektrode trägt eine sensoraktive Schicht, die eine biosensitive bzw. chemosensitive Beschichtung sein kann. In einem Umgebungsbereich von dieser Mess-Elektrode ist eine zusätzliche Elektrode, die auch als Vergleichs- bzw. Differenz-Elektrode bezeichnet wird, vorgesehen, welche ebenfalls mit einem zu untersuchenden Analyten in elektrischem Kontakt steht, aber aufgrund ihrer fehlenden oder gegenüber der Mess-Elektrode unterschiedlichen Beschichtung kein bzw. ein exakt definiertes Messsignal liefern kann. Die Vergleichs-Elektrode führt bei einer Messung den gleichen Spannungssprung durch wie eine Mess-Elektrode. Bei einer Vergleichs-Elektrode werden dann die gleichen Störladungen auftreten wie in einer Mess-Elektrode (beispielsweise hervorgerufen durch das Umladen der Doppelschichtkapazität, unerwünschte Oxidationen/Reduktionen unbekannter Stoffe in einem Analyten, etc.). Die Vergleichs-Elektrode kann exakt die gleiche Geometrie aufweisen wie die Sensor-Elektrode, so dass dort näherungsweise die gleiche Störladung auftritt wie an den Sensor-Elektroden. Mittels der erfindungsgemäßen Schaltungstechnik kann bereits im Sensorpixel, d.h. On-Chip, eine Differenzbildung zwischen dem Messsignal der Sensor-Elektrode und dem Vergleichs-Signal der Vergleichs-Elektrode durchgeführt werden. Das resultierende Signal, vorzugsweise ein Differenzsignal aus den beiden genannten erfassten Signalen, ist dann ein Maß für das reine Messsignal, das von unerwünschten Störbeiträgen frei ist, und repräsentiert ausschließlich die Ladungsträger, die aus erwünschten Oxidationen bzw. Reduktionen an der sensoraktiven Schicht hervorgegangen sind.

Somit ist mit der erfindungsgemäßen Sensor-Anordnung der Signal-Stör-Abstand signifikant verbessert und die Auflösung des Messsystems erhöht.

Alternativ zu einer Vergleichs-Elektrode pro Sensor-Anordnung kann in einem Sensor-Array mit vielen gleichartigen Sensoren mindestens eine Vergleichs-Elektrode für das gesamte Array gemeinsam vorgesehen werden. Das Signal dieser Vergleichsmessung kann beispielsweise allen Sensorpixeln zur Differenzbildung bereitgestellt werden. Wird dieses Signal aus einer Mehrzahl von Vergleichs-Elektroden gewonnen, führt eine statistische Mittlung der Vergleichs-Signale der mehreren Vergleichs-Elektroden zu einem sehr exakten Referenzwert, auf den die Messwerte bezogen werden können.

Die Vergleichs-Elektrode hat bevorzugt die gleiche Geometrie wie die Mess-Elektroden, so dass vermieden ist, dass Flächeneffekte und Randeffekte das Signal beider Elektroden in unterschiedlicher Weise beeinflussen. Sind die Geometrien unterschiedlich, müssen die beiden Signale aufeinander abgestimmt werden. Da die Ladungsmengen in erster Näherung linear mit der Oberfläche der Elektrode ansteigen, kann das Flächenverhältnis durch eine entsprechende Skalierung der Signale bei der Differenzbildung berücksichtigt werden.

Die mindestens eine Vergleichs-Elektrode ist vorzugsweise frei von signalgebenden Stoffen. Das heißt, dass das Sensorereignis einer Mess-Elektrode (z.B. Komplexbildung, Hybridisierung, etc.) nur eine zu vernachlässigende Änderung der elektrochemischen Eigenschaften einer Vergleichs-Elektrode hervorruft. Bei einem für die Coulometrie charakteristischen Spannungssprung treten dort daher ausschließlich Ladungsträger aus der Umladung der elektrochemischen Doppelschicht auf, sowie parasitäre Oxidationen bzw. Reduktionen. Die signalgebenden Stoffe werden ausschließlich an der mindestens eine Sensor-Elektrode (Mess-Elektrode) umgesetzt.

Alternativ kann eine Vergleichs-Elektrode auch mit einer definierten signalgebenden Beschichtung versehen werden, so dass dort bei einem Spannungssprung eine bekannte Ladungsmenge frei wird, die dann mit dem Messsignal verglichen werden kann. Die signalgebende Beschichtung der Vergleichs-Elektrode sollte in diesem Fall nicht durch ein Sensorereignis beeinflusst werden. Anschaulich kann an einer Vergleichs-Elektrode mit einer solchen definierten signalgebenden Beschichtung ein "volles" Sensorsignal simuliert werden. Das heißt, das Signal an der Vergleichs-Elektrode ist dann beispielsweise genauso wie jenes an einer Sensor-Elektrode, bei der an (nahezu) allen Fängermolekülen Hybridisierungsereignisse stattgefunden haben.

Ein anderer Vorteil der Differenzmessung ist darin zu sehen, dass die Elektrodenspannungen nicht sehr exakt kontrolliert werden müssen, wie es beispielsweise bei einem Einzelelektrodensystem der Fall wäre. Bei einem Einzelelektrodensystem führt eine falsche Ausgangsspannung und eine falsche Zielspannung zu unerwünschten Oxidationen oder Reduktionen von in einem Elektrolyten vorhandenen Stoffen, die zum Messsignal beitragen und vom eigentlichen Messsignal des Sensorereignisses nicht zu unterscheiden sind. Bei einer Differenzmessung treten diese unkontrollierten Oxidationen und Reduktionen auch an der Vergleichs-Elektrode auf und werden schließlich mittels Differenzbildens von dem Messsignal abgezogen.

Wenn die Sprungspannungen nicht mehr sehr exakt kontrolliert werden müssen, kann der Aufwand für eine Referenz-Elektrode, die das Elektrolytpotential misst, reduziert werden. In diesem Fall kann auch eine Quasi-Referenz-Elektrode, die beispielsweise aus einer Edelmetall-Elektrode besteht, die mit dem Elektrolyten in Kontakt steht, ein ausreichend konstantes elektrisches Potential liefern.

Ein wichtiger Aspekt der Erfindung ist somit darin zu sehen, dass bereits innerhalb eines Sensorpixels ein Messsignal in Beziehung zu einem oder mehreren Vergleichs-Signalen (Referenzsignalen) gesetzt wird, insbesondere eine Differenzmessung bzw. Differenzbildung vorgesehen wird, wodurch der Signal-Stör-Abstand vergrößert wird und somit die Genauigkeit und Auflösung des Sensorsystems verbessert wird.

Die Sensor-Anordnung kann als Biosensor-Anordnung oder als Chemosensor-Anordnung eingerichtet sein. Bei einer Ausgestaltung als Biosensor-Anordnung kann die sensoraktive Schicht eine Schicht aus Fängermolekülen sein (z.B. DNA-Halbstränge), die mit zu erfassenden Molekülen, nämlich mit zu den DNA-Fängermolekülen komplementären DNA-Halbsträngen, hybridisieren können.

Bei einer Ausgestaltung der Sensor-Anordnung als Chemosensor-Anordnung kann die Sensor-Anordnung beispielsweise eine Gaskonzentration einer Umgebung messen, indem Gasatome gemeinsam mit dem Material der sensoraktiven Schicht elektrochemisch aktive Bestandteile, z.B. elektrische Ladungsträger, generieren, welche detektierbar sind.

Bei einer Ausgestaltung der Sensor-Anordnung als Biosensor-Anordnung kann die Sensor-Anordnung zum Beispiel als DNA-Sensor-Anordnung, als Protein-Sensor-Anordnung oder als Antikörper-Sensor-Anordnung eingerichtet sein.

Die Auswerte-Einheit der Sensor-Anordnung kann derart eingerichtet sein, dass sie die Differenz zwischen dem Sensor-Signal und dem Vergleichs-Signal bildet. Mittels Subtrahierens des Vergleichs-Signals von dem Sensor-Signal können Signalkomponenten, die nicht auf einem Sensorereignis beruhen, eliminiert werden, wodurch Störbeiträge zum Messsignal entfernt werden.

Bei der Sensor-Anordnung kann die Auswerte-Einheit einen in dem Substrat integrierten Operationsverstärker aufweisen, der das Sensor-Signal und das Vergleichs-Signal verarbeitet.

Bei der Sensor-Anordnung kann der Operationsverstärker zum Integrieren von elektrischen Ladungsträgern eingerichtet sein. Das Vorsehen eines monolithisch integrierten Komparators und/oder eines monolithisch integrierten Operationsverstärkers ermöglicht eine platzsparende, effektive und einfache On-Chip-Verarbeitung der Signale und gewährleistet somit ein hohes Signal-Rausch-verhältnis.

Die mindestens eine Vergleichs-Elektrode der Sensor-Anordnung kann von einer sensoraktiven Schicht frei sein. In einem solchen Fall ist sichergestellt, dass Sensorereignisse in einem Umgebungsbereich der Vergleichs-Elektrode nicht zu einem Signal führen. Somit sind Signalkomponenten des Vergleichs-Signals lediglich durch Untergrundkomponenten bedingt, die somit von dem Signal der Sensor-Elektrode abgezogen werden können, um das Signal der Sensor-Elektrode von Untergrundkomponenten zu bereinigen.

Bei der Sensor-Anordnung kann die mindestens eine Vergleichs-Elektrode eine signalgebende Beschichtung aufweisen, die bei einer vorgebbaren Änderung des elektrischen Potentials vom Sensorereignis unabhängig eine vorgebbare Menge elektrochemisch aktiver Teilchen generiert. Gemäß dieser Ausgestaltung ist die signalgebende Beschichtung derart eingerichtet, dass sie bei einem Sensorereignis kein Signal generiert. Das von der signalgebenden Beschichtung generierte Signal kann eine definierte signalgebende Beschichtung sein, die beispielsweise bei einem Spannungssprung eine bekannte Ladungsmenge freisetzt, die dann mit einem Messsignal verglichen werden kann. Jedoch sollte diese signalgebende Beschichtung der Vergleichs-Elektrode nicht durch ein Sensor-Ereignis beeinflusst werden.

Die mindestens eine Sensor-Elektrode und die mindestens eine Vergleichs-Elektrode können eine im Wesentlichen identische Geometrie aufweisen. Mit anderen Worten können die Sensor-Elektrode und die Vergleichs-Elektrode in sehr ähnlicher Weise geformt sein, insbesondere die gleiche aktive Oberfläche aufweisen, oder zumindest Oberflächen haben, die in einem vorgegebenen festlegbaren Verhältnis zueinander stehen. Dann sind die Signale, nämlich das Sensor-Signal und das Vergleichs-Signal, besonders gut miteinander vergleichbar.

Bei der Sensor-Anordnung kann eine Mehrzahl von Vergleichs-Elektroden vorgesehen sein, wobei basierend auf dem Sensor-Signal und dem Vergleichs-Signal der Mehrzahl von Vergleichs-Elektroden ein Sensor-Ereignis an mindestens einer Sensor-Elektrode ermittelbar ist. Indem eine statistische Mittelung einer Mehrzahl von Vergleichs-Signalen von einer Mehrzahl von Vergleichs-Elektroden durchgeführt wird, ist das Vergleichs-Signal besonders zuverlässig und von statistischen Schwankungen unabhängig, wenn es von dem Sensor-Signal abgezogen wird.

Die Sensor-Anordnung kann ein Mittel zum Konstanthalten der elektrischen Potentiale an der mindestens einen Sensor-Elektrode und an der mindestens einen Vergleichs-Elektrode aufweisen. Ein solches Mittel zum Konstanthalten der elektrischen Potentiale kann mittels mindestens einer Kapazität realisiert sein, vorzugsweise mittels einer ersten Kapazität für die Sensor-Elektrode und einer zweiten Kapazität für die Vergleichs-Elektrode. Indem ein Anschluss der beiden Kapazitäten mit der jeweils zugehörigen Elektrode gekoppelt wird, kann der andere Anschluss mit einem Ausgang eines Operationsverstärkers gekoppelt werden, an dessen Eingang die Signale der jeweiligen Elektroden bereitgestellt sind. Eine derartige Anordnung integriert die bei einem Spannungssprung auftretenden Ladungsträger an der Sensor- bzw. Vergleichselektrode.

Ferner kann eine Subtrahier-Kapazität zum Bilden der Differenz aus dem Sensor-Signal und dem Vergleichs-Signal vorgesehen sein, wobei ein erster Anschluss der Subtrahier-Kapazität mit der mindestens einen Sensor-Elektrode koppelbar ist und wobei ein zweiter Anschluss der Subtrahier-Kapazität mit der mindestens einen Vergleichs-Elektrode koppelbar ist. Mit diesen Maßnahmen können die elektrischen Ladungen, die mit dem Sensor-Signal und mit dem Vergleichs-Signal verknüpft sind, direkt voneinander abgezogen werden, indem sie an Anschlüsse der Subtrahier-Kapazität geleitet werden.

Ferner kann eine erste Vergleichs-Elektrode vorgesehen sein, an der ein Null-Signal generierbar ist. Darüber hinaus kann eine zweite Vergleichs-Elektrode vorgesehen sein, an der ein Voll-Signal generierbar ist. Das Null-Signal ist ein Signal, das lediglich Untergrundkomponenten enthält, und das unabhängig von einem Sensorereignis ist. Das Voll-Signal entspricht einem maximalen Signal. Ein Sensor-Signal an der Sensor-Elektrode kann dann zu dem Null-Signal und zu dem Voll-Signal in Bezug gesetzt werden, und liegt in der Regel zwischen dem Null-Signal und dem Voll-Signal, wodurch quantitative Aussagen über ein Sensor-Ereignis getroffen werden können.

Die erfindungsgemäße Sensor-Anordnung kann einen Analog-/Digital-Wandler aufweisen, zum Bilden eines digitalen Ausgangs-Signals basierend auf dem Sensor-Signal und basierend auf dem Vergleichs-Signal. Ein solches Digital-Signal kann störungsfreier transportiert werden, wodurch wiederum die Nachweissensitivität erhöht ist. Dies gilt insbesondere dann, wenn der Analog-/Digital-Wandler On-Chip realisiert ist.

Das Null-Signal und das Voll-Signal können das obere und das untere elektrische Referenzpotential des Analog-/Digital-Wandlers bilden. Bei einem Analog-/Digital-Wandler wird eine Referenzspannung, gebildet aus der Differenz zwischen Voll-Signal und Null-Signal, an einer Kaskade von Abstufungselementen sukzessive verringert, und mit einem Sensor-Signal verglichen. An dem Ausgang von Komparatoren eines solchen Analog-Digital-Wandlers ist ein Thermometercode bereitgestellt, d.h. ein Digital-Signal, das ein Maß für die erfolgten Sensorereignisse ist.

Im Weiteren wird das erfindungsgemäße Sensor-Array, das erfindungsgemäße Sensor-Anordnungen aufweist, näher beschrieben. Ausgestaltungen der Sensor-Anordnungen gelten auch für das Sensor-Array und umgekehrt.

Das Sensor-Array kann eine Ansteuer-Einrichtung aufweisen, die derart eingerichtet ist, dass mit ihr selektiv eine Sensor-Anordnung, ein Teil der Sensor-Anordnungen oder alle Sensor-Anordnungen ansteuerbar ist oder sind.

Somit können entweder alle Sensor-Anordnungen des Sensor-Arrays gleichzeitig betrieben werden und auch gleichzeitig angesteuert bzw. ausgelesen werden, oder es können sukzessive einzelne der Sensor-Anordnungen nacheinander ausgewählt werden. Auch ein zeilenweises oder spaltenweises Auswählen von Sensor-Anordnungen in einer matrixförmigen Anordnung von Sensor-Anordnungen ist möglich.

Bei einem Sensor-Array kann ferner zumindest eine der Vergleichs-Elektroden für zumindest einen Teil der Sensor-Anordnungen gemeinsam vorgesehen sein. Somit ist es möglich, zum Miniaturisieren des Sensor-Arrays weniger Vergleichs-Elektroden vorzusehen als Sensor-Anordnungen, so dass sich dann mehrere Sensor-Anordnungen ein und dieselbe Vergleichs-Elektrode teilen.

Ausführungsbeispiele der Erfindung sind in den Figuren dargestellt und werden im Weiteren näher erläutert.

Es zeigen:
- Figuren: 1A, 1B unterschiedliche Betriebszustände einer Redox-Cycling-Sensor-Anordnung gemäß dem Stand der Technik,
- Figur 2: eine Interdigitalelektroden-Anordnung gemäß dem Stand der Technik,
- Figur 3: eine Sensor-Anordnung gemäß einem ersten Ausführungsbeispiel der Erfindung,
- Figur 4: eine Sensor-Anordnung gemäß einem zweiten Ausführungsbeispiel der Erfindung,
- Figur.5: eine Sensor-Anordnung gemäß dem dritten Ausführungsbeispiel der Erfindung,
- Figur 6: eine Sensor-Anordnung gemäß einem vierten Ausführungsbeispiel der Erfindung,
- Figur 7: eine Sensor-Anordnung gemäß einem fünften Ausführungsbeispiel der Erfindung,
- Figur 8: eine schematische Ansicht einer Sensor-Anordnung gemäß einem Ausführungsbeispiel der Erfindung,
- Figur 9: einen Analog-/Digital-Wandler einer erfindungsgemäßen Sensor-Anordnung,
- Figur 10: eine Pixelschaltung gemäß einem Aspekt der Erfindung,
- Figur 11: eine Pixelschaltung gemäß einem anderen Aspekt der Erfindung,
- Figur 12: die Pixelschaltung gemäß Figur 10 in vereinfachter Darstellung,
- Figuren: 13A und 13B Pixelschaltungen mit Referenzschaltungen gemäß unterschiedlichen Aspekten der Erfindung,
- Figur 14: eine Pixelschaltung gemäß einem anderen Aspekt der Erfindung,
- Figur 15: eine schaltungstechnische Realisierung einer Betriebsschaltung mit einer Vorlade-Schaltung zum Vorladen der Stromspiegel,
- Figur 16: eine schaltungstechnische Realisierung der Potentiostaten-Schaltung gemäß einem Aspekt der Erfindung, und
- Figur 17: eine schaltungstechnische Realisierung der Pixelschaltung gemäß Figur 12.

Gleiche oder ähnliche Komponenten in unterschiedlichen Figuren sind mit gleichen Bezugsziffern versehen.

Die Darstellungen in den Figuren sind schematisch und nicht maßstäblich.

Im Weiteren wird bezugnehmend auf **Fig.3** eine Sensor-Anordnung 300 gemäß einem ersten Ausführungsbeispiel der Erfindung beschrieben.

Die in Fig.3 gezeigte Sensor-Anordnung 300 ist zum Durchführen eines Sensor-Verfahrens eingerichtet. Die Sensor-Anordnung 300 ist zum Erfassen von in einem Analyten (nicht gezeigt) möglicherweise enthaltenen DNA-Halbsträngen (nicht gezeigt) eingerichtet und ist in einem Silizium-Substrat monolithisch integriert. Die Sensor-Anordnung 300 enthält eine auf dem Silizium-Substrat angeordnete Sensor-Elektrode 301, die mit DNA-Halbsträngen 311 als Fängermoleküle, d.h. mit einer sensoraktiven Schicht, beschichtet ist. In Anwesenheit von zu erfassenden DNA-Halbsträngen als zu erfassende Moleküle werden elektrochemisch aktive Teilchen bereitgestellt, die mittels Erfassens eines elektrischen Sensor-Signals an der Sensor-Elektrode 301 detektiert werden. Ferner ist bei der Sensor-Anordnung 300 eine auf dem Silizium-Substrat angeordnete Vergleichs-Elektrode 302 gebildet, an der ein elektrisches Vergleichs-Signal erfassbar ist. Da die Vergleichs-Elektrode 302 von Fängermolekülen frei ist (oder mit nicht bindungsbereiten Fängermolekülen ausgestattet ist, wobei an nicht bindungsbereiten Fängermolekülen auch in Anwesenheit zu erfassender Moleküle kein Sensorereignis auftritt), ist das an ihr detektierte Signal von einem Sensorereignis im Wesentlichen unabhängig.

Darüber hinaus ist ein monolithisch in dem Silizium-Substrat integrierter Auswerte-Schaltkreis 303 (Betriebsschaltung) vorgesehen, mittels welchem basierend auf dem Serisor-Signal und dem Vergleichs-Signal ein Sensor-Ereignis an der Sensor-Elektrode 301 ermittelt wird. Die als Biosensor-Anordnung eingerichtete Sensor-Anordnung 300 stellt ein Ausführungsbeispiel der Erfindung dar, bei dem die Vergleichs-Elektrode 302 von einer sensoraktiven Schicht frei ist. Mit anderen Worten sind keine DNA-Halbstränge 311 auf der Sensor-Elektrode 302 immobilisiert.

Die Sensor-Elektrode 301 und die Vergleichs-Elektrode 302 weisen eine im Wesentlichen identische Geometrie auf, so dass die an ihnen generierten elektrischen Signale miteinander gut vergleichbar sind.

Die Vergleichs-Elektrode 302 ist mit einem ersten Schalt-Element 307 gekoppelt. Die Sensor-Elektrode 301 ist mit einem zweiten Schalt-Element 308 gekoppelt. Bei geschlossenem ersten Schalt-Element 307 ist die Vergleichs-Elektrode 302 mit einem positiven Eingang eines in dem Silizium-Substrat monolithisch integrierten volldifferenziellen Operationsverstärkers 304 gekoppelt. In geschlossenem Zustand des zweiten Schalt-Elements 308 ist die Sensor-Elektrode 301 mit einem negativen Eingang des Operationsverstärkers 304 gekoppelt. Ferner ist in einem geschlossenen Zustand des ersten Schalt-Elements 307 die Vergleichs-Elektrode 302 mit einem ersten Anschluss einer ersten Kapazität 305 und mit einem dritten Schalt-Element 309 gekoppelt. In geschlossenem Zustand des zweiten Schalt-Elements 308 ist die Sensor-Elektrode 301 mit einem ersten Anschluss einer zweiten Kapazität 306 und mit einem vierten Schalt-Element 310 gekoppelt. An einem negativen Ausgang des Operationsverstärkers 304 ist ein elektrisches Vergleichs-Signal V_{Offset} bereitgestellt, das an dem zweiten Anschluss der ersten Kapazität 305 und an einem zweiten Anschluss des Schalt-Elements 309 anliegt. An einem positiven Ausgang des Operationsverstärkers 304 ist das Sensor-Signal V_{Sensor} bereitgestellt, das ferner an einem zweiten Anschluss der zweiten Kapazität 306 und an einem zweiten Anschluss des vierten Schalt-Elements 310 anliegt.

Bei der Sensor-Anordnung 300 ist eine volldifferentielle Ausführung eines Ladungs-Sensors realisiert. Die Vergleichs-Elektrode 302 und die Sensor-Elektrode 301 (Mess-Elektrode) sind an die Eingänge des voll-differenziellen Operationsverstärkers 304 angeschlossen. Über die Integrationskapazitäten 305, 306 wird genau die Ladungsmenge auf die Elektroden 301, 302 zurückgeführt, dass die elektrische Spannung der beiden Elektroden 301, 302 stets konstant bleibt. Der Operationsverstärker 304 ist mit einer Common-Mode Schaltung ausgestattet, die sicherstellt, dass das elektrische Potential an den Eingängen einen vorgebbaren Wert aufweist (in Fig.3 durch das elektrische Masse-Potential an dem Masse-Anschluss 312 dargestellt). Ein Betrieb mit konstanter Elektrodenspannung ist vorgesehen, wenn der elektrochemische Spannungssprung durch das Elektrolytpotential erfolgt. Soll das Elektrolytpotential hingegen konstant bleiben, kann über die Common-Mode-Spannung am Operationsverstärker 304 auch die Elektrodenspannung sprunghaft verändert werden.

Am Ausgang des Auswerte-Schaltkreises 303 werden zwei Spannungssignale V_{Offset} und V_{Signal} halten, die jeweils proportional zu der detektierten Ladungsmenge an der Sensor-Elektrode 301 bzw. an der Vergleichs-Elektrode 302 sind. Misst man eine Spannung zwischen diesen beiden Anschlüssen, d.h. V_{Signal}-V_{offset}, so erhält man direkt das Differenzsignal, das von denjenigen Signalkomponenten von V_{Signal} frei ist, die nicht auf einem Sensorereignis beruhen und somit auch in V_{Offset} enthalten sind. Die Werte der ersten und zweiten Kapazitäten 305, 306 legen die Empfindlichkeit der Sensor-Anordnung 300 auf das Vergleichs- bzw. Messsignal fest. Bevorzugt weisen beide Elektroden 302, 301 die gleiche Geometrie auf, so dass zweckmäßigerweise gleiche Integrationskondensatoren 305, 306 verwendet werden.

Die dritten und vierten Schalt-Elemente 309, 310, anschaulich Rücksetz-Schalter, dienen zur Initialisierung der Schaltung, d.h. zur Löschung von Ladungen aus vorangegangenen Messungen.

Die ersten und zweiten Schalt-Elemente 307, 308, anschaulich Speicher-Schalter, zwischen den Elektroden 301, 302 und den Eingangsleitungen an den Eingängen des Operationsverstärkers 304 dienen dazu, nach erfolgter Messung das Messsignal in den Integrationskapazitäten 305 bzw. 306 zu speichern. Zwischen dem Ende der Messungen und dem Auslesen des Ergebnisses kann dann eine vergleichsweise große Zeit liegen, was insbesondere bei großen Sensor-Arrays mit einer großen Anzahl von Sensor-Anordnungen 300 vorteilhaft ist.

Die Schalter 307 bis 310 sind in den nachfolgend beschriebenen Ausführungsbeispielen nicht dargestellt, können dort aber selbstverständlich jeweils auch vorgesehen sein.

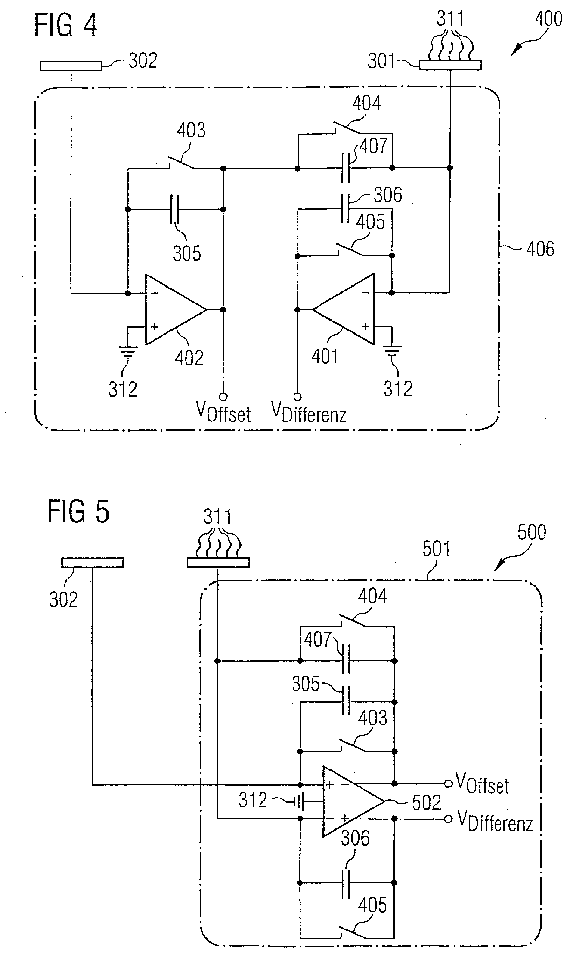

Im Weiteren wird bezugnehmend auf **Fig.4** eine Sensor-Anordnung 400 gemäß einem zweiten Ausführungsbeispiel der Erfindung beschrieben.

Die Sensor-Elektrode 301 ist mit dem invertierenden Eingang eines ersten Komparators 401 gekoppelt, dessen nicht-invertierender Eingang mit dem Masse-Anschluss 312 gekoppelt ist. Ein Ausgang des ersten Komparators 401 ist an einen ersten Ausgangsanschluss des Auswerte-Schaltkreises 406 angeschlossen, an dem das Signal V_{Differenz} anliegt. Ferner ist der Ausgang des ersten Komparators 401 über ein siebtes Schalt-Element 405 mit dem invertierenden Eingang des ersten Komparators 401 rückgekoppelt. Darüber hinaus ist der Ausgang des ersten Komparators 401 über die zweite Kapazität 306 mit dem invertierenden Eingang des Komparators 401 rückgekoppelt. Die Sensor-Elektrode 301 ist ferner mit einem ersten Anschluss eines sechsten Schalt-Elements 404 und mit einem ersten Anschluss einer dritten Kapazität 305 gekoppelt, wobei die zweiten Anschlüsse des sechsten Schalt-Elements 404 und der dritten Kapazität 407 miteinander und mit einem ersten Anschluss eines fünften Schalt-Elements 403 gekoppelt sind. Der erste Anschluss des fünften Schalt-Elements 403 ist ferner mit einem zweiten Ausgangsanschluss des Auswerte-Schaltkreises 406 (Betriebsschaltung) gekoppelt, an dem das Signal V_{Offset} bereitgestellt ist. Ferner ist der zweite Anschluss des fünften Schalt-Elements 403 mit einem ersten Anschluss der ersten Kapazität 305, mit der Vergleichs-Elektrode 302 und mit einem invertierenden Eingang eines zweiten Komparators 402 gekoppelt. Ein nicht-invertierender Eingang des zweiten Komparators 402 ist mit dem Masse-Anschluss 312 gekoppelt. Der Ausgang des zweiten Komparators 402 ist mit einem zweiten Anschluss des ersten Kondensators 305 und mit dem ersten Anschluss des fünften Schalt-Elements 403 gekoppelt.

Bei der in Fig.4 gezeigten Sensor-Anordnung 400 ist als Ausgangssignal bereits das Differenzsignal V_{Differenz} zwischen den Signalen an der Mess-Elektrode 301 und an der Vergleichs-Elektrode 302 ausgegeben. Dies wird erreicht, indem die bevorzugt gleiche Ladungsmenge, die von der Sensor-Anordnung 400 über die erste Kapazität 305 zur Vergleichs-Elektrode 302 geleitet wird, über die dritte Kapazität 407 an die Sensor-Elektrode 301 geleitet wird. Hierdurch wird gewissermaßen eine Grundladung, die an der Mess-Elektrode 301 anfällt, bereitgestellt, und der Schaltungsteil, der die Mess-Elektrode 301 betreibt, muss nur noch die verbleibende Differenzladung bereitstellen. Als Ausgangssignal erhält man folglich eine Spannung, die direkt das Differenzsignal zwischen den Potentialen an den beiden Elektroden 301, 302 repräsentiert.

Im Weiteren wird bezugnehmend auf **Fig.5** eine Sensor-Anordnung 500 gemäß einem dritten Ausführungsbeispiel der Erfindung beschrieben.

Die Sensor-Anordnung 500 ist hinsichtlich ihrer Funktionalität sehr ähnlich wie die Sensor-Anordnung 400, wenngleich die einzelnen Komponenten in dem Auswerte-Schaltkreis 501 in etwas anderer Weise verschaltet sind wie gemäß Fig.4.

In dem Auswerte-Schaltkreis 501 ist insbesondere ein Operationsverstärker 502 vorgesehen. Die Vergleichs-Elektrode 302 ist mit einem positiven Eingang des Operationsverstärkers 502 gekoppelt. Die Sensor-Elektrode 301 ist mit einem negativen Eingang des Operationsverstärkers 502 gekoppelt. Ferner ist an einem negativen Ausgang des Operationsverstärkers 502 das Offset-Signal V_{Offset} bereitgestellt, wohingegen an einem positiven Ausgang des Operationsverstärkers 502 das Differenzsignal V_{Differenz} aus dem Sensor-Signal an der Sensor-Elektrode 301 und dem Offset-Signal der Vergleichs-Elektrode 302 bereitgestellt ist.

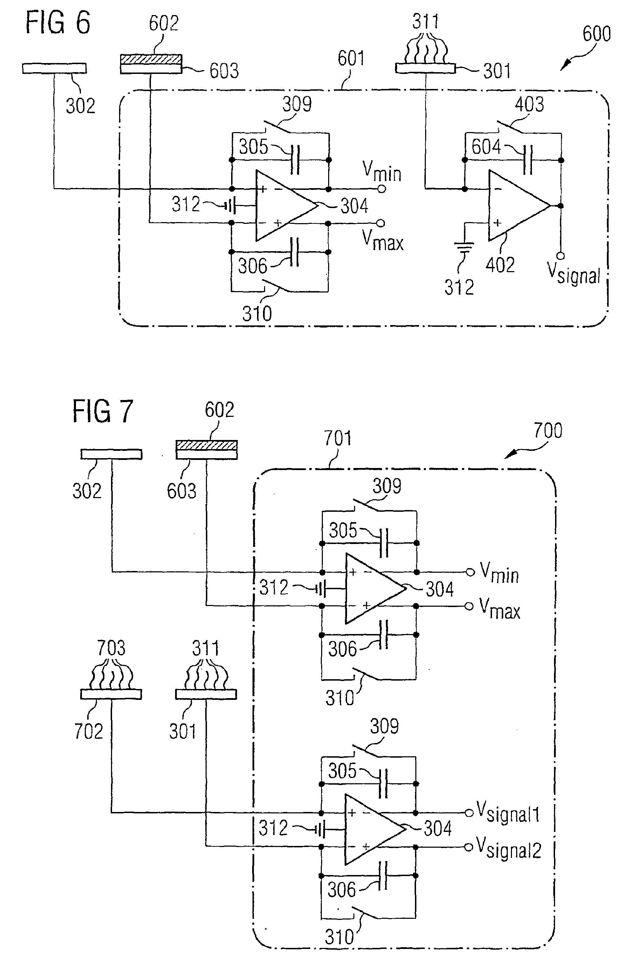

Im Weiteren wird bezugnehmend auf **Fig.6** einen Sensor-Anordnung 600 gemäß einem vierten Ausführungsbeispiel der Erfindung beschrieben.

Bei der Sensor-Anordnung 600 ist zusätzlich zu der Vergleichs-Elektrode 302 eine Zusatz-Vergleichs-Elektrode 603 vorgesehen, auf der eine signalgebende Schicht 602 angeordnet wird. Die signalgebende Schicht 602 kann ein Maximal-Signal, d.h. ein einem maximalen Sensorereignis entsprechendes Signal, an der Zusatz-Vergleichs-Elektrode 603 erzeugen.

Die Auswerte-Einheit 601 der Sensor-Anordnung 600 ist, wie in Fig.6 gezeigt, in zwei Teileinheiten aufgeteilt, von denen eine zur Verarbeitung der Vergleichssignale der Vergleichs-Elektrode 302 und der Zusatz-Vergleichs-Elektrode 603 eingerichtet ist. Diese Teilanordnung entspricht hinsichtlich ihrer Verschaltung im Wesentlichen der in Fig.3 gezeigten Verschaltung. An dem negativen Ausgang des Operationsverstärkers 304 ist das erste (untere) Vergleichssignal Vₘᵢₙ bereitgestellt, wohingegen an dem positiven Ausgang des Operationsverstärkers 304 das zweite (obere) Vergleichsignal Vₘₐₓ bereitgestellt ist. Das erste Vergleichssignal Vₘᵢₙ entspricht einem Offset-Signal, das an der von signalgebendem Material freien Vergleichs-Elektrode 302 generiert ist. Das Signal Vₘₐₓ basiert auf dem Vollsignal, welches aufgrund des signalgebenden Materials 602 an der Zusatz-Vergleichs-Elektrode 603 generiert ist.

Ein anderer Teilbereich des Auswerte-Schaltkreises 601 ist im gemäß Fig.6 rechten Teil gezeigt und dient zur Verarbeitung des Signals der Sensor-Elektrode 301. Ein Sensorsignal der Sensor-Elektrode 301 wird einem invertierenden Eingang des Komparators 402 zugeführt, wohingegen der nicht-invertierende Eingang des Komparators 402 mit dem Masse-Anschluss 312 gekoppelt ist. Ferner ist die Sensor-Elektrode 301 mit einem ersten Anschluss einer vierten Kapazität 604 und mit einem ersten Anschluss des Schalt-Elements 403 gekoppelt, wobei die zweiten Anschlüsse des Schalt-Elements 403 und der vierten Kapazität 604 mit der Ausgang des Komparators 402 und mit einem Signalausgang des Auswerte-Schaltkreises 601 gekoppelt sind, an dem V_{Signal} bereitgestellt ist, d.h. das Sensorsignal der Sensor-Elektrode 301.

Somit ist in Fig.6 eine Ausführungsform der erfindungsgemäßen Sensor-Anordnung gezeigt, bei der nicht nur ein Vergleichssignal zum Vergleich mit dem Messsignal V_{Signal} herangezogen wird, sondern zwei Vergleichssignale, nämlich Vₘᵢₙ und Vₘₐₓ. Insbesondere in der Analyse von Biomolekülen wie beispielsweise DNA oder Proteinen ist es vorteilhaft, mit zwei solchen Kontrollpositionen zu arbeiten, von denen eine ein volles Signal (Vₘₐₓ) liefert, die andere nur das Hintergrund- bzw. Nullsignal Vₘᵢₙ. Das Messsignal wird auf die Signalintensität dieser beiden Referenzsignale Vₘₐₓ, Vₘᵢₙ bezogen. Die erfindungsgemäße Ausführungsform der Pixelschaltung 601 liefert diese drei Signale Vₘᵢₙ, Vₘₐₓ und V_{Signal} simultan. Das Messergebnis V_{Signal} kann also unmittelbar mit den Vergleichssignalen Vₘᵢₙ und Vₘₐₓ verglichen werden.

Im Weiteren wird bezugnehmend auf **Fig.7** eine Sensor-Anordnung 700 gemäß einem fünften Ausführungsbeispiel der Erfindung beschrieben.

Bei der Sensor-Anordnung 700 ist wiederum ein Auswerte-Schaltkreis 701 vorgesehen, der gemäß Fig.7 in zwei Teilbereiche aufgeteilt ist, nämlich in einen ersten Teilbereich zum Verarbeiten von Signalen der Vergleichs-Elektrode 302 und der Zusatz-Vergleichs-Elektrode 602, und in einen zweiten Teilbereich zum Auswerten der Signale der Sensor-Elektrode 301 und einer zusätzlichen Zusatz-Sensor-Elektrode 702.

Die Auswertung der Vergleichssignale der Vergleichs-Elektrode 302 und der Zusatz-Vergleichs-Elektrode 602 ist in dem Auswerte-Schaltkreis 701 genauso realisiert wie in dem Auswerte-Schaltkreis 601 aus Fig.6.

Auf der Zusatz-Sensor-Elektrode 702 sind DNA-Halbstränge 703 als Fängermoleküle immobilisiert, die von den DNA-Halbsträngen 311 auf der ersten Sensor-Elektrode 301 unterschiedlich sind. Mit anderen Worten können die DNA-Halbstränge 703 mit zu erfassenden Molekülen einer Sequenz hybridisieren, die zu der Sequenz von zu erfassenden Molekülen unterschiedlich ist, die mit den Fängermolekülen 311 hybridisieren können.

Die Auswertung der Signale der Sensor-Elektrode 301 und der Zusatz-Sensor-Elektrode 702 erfolgt genauso wie die Auswertung der Vergleichssignale der Vergleichs-Elektrode 302 und der Zusatz-Vergleichs-Elektrode 602. Das Sensorsignal am negativen Ausgang des Operationsverstärkers 304, das auf Sensorereignisse an der Zusatz-Sensor-Elektrode 702 zurückzuführen ist, wird als V_{Signal1} bezeichnet. Das Sensorsignal an dem positiven Ausgang des Operationsverstärkers 304, das auf Sensorereignisse an der Sensor-Elektrode 301 zurückzuführen ist, wird als V_{Signal2} bezeichnet.

Die Sensor-Anordnung 700 stellt eine Weiterentwicklung der Ausführungsform aus Fig.6 dar. Gemäß Fig.7 werden zwei Messsignale mit zwei Vergleichssignalen in Beziehung gesetzt. Somit geht aus Fig.7 hervor, dass die Anzahl der Referenzsignale und die Anzahl der Messsignale, die innerhalb eines Sensorpixels 700 ausgewertet werden können, größer als eins sein kann.

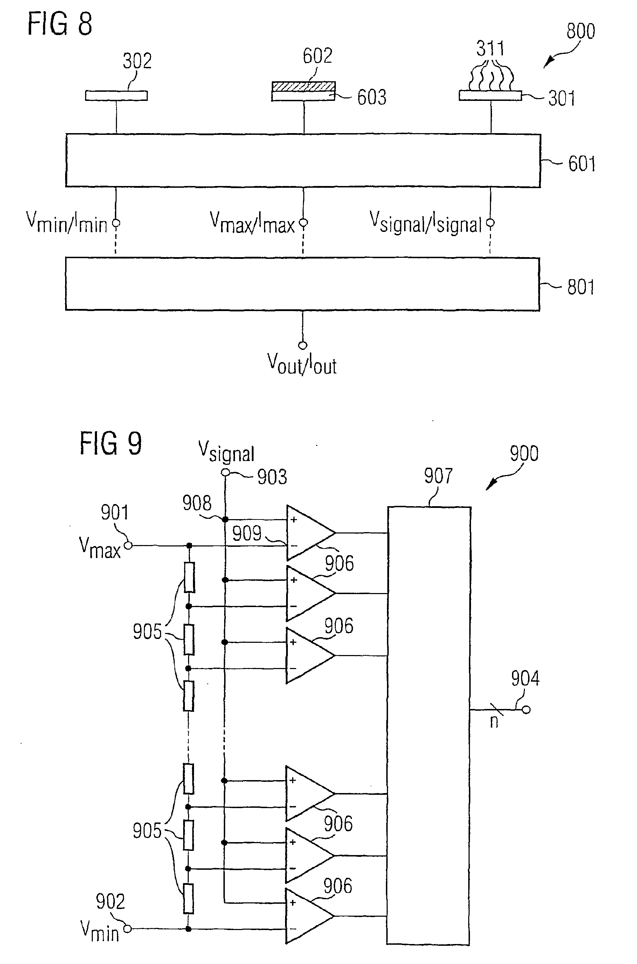

Im Weiteren wird bezugnehmend auf **Fig.8** eine Sensor-Anordnung 800 gemäß einem Ausführungsbeispiel der Erfindung beschrieben.

Die Sensor-Anordnung 800 stellt eine schematische Ansicht dar. An der Vergleichs-Elektrode 302 wird ein erstes Spannungs-Vergleichssignal Vₘᵢₙ (bzw. ein entsprechendes Strom-Signal Iₘᵢₙ) generiert und mittels des Auswerte-Schaltkreises 601 verarbeitet. An der Zusatz-Vergleichs-Elektrode 603, die mit einer signalgebenden Schicht 602 versehen ist, wird ein Spannungs-Vollsignal Vₘₐₓ (bzw. ein entsprechendes Strom-Signal Iₘₐₓ) generiert, das von dem Auswerte-Schaltkreis 601 verarbeitet wird. Aufgrund eines Hybridisierungsereignisses zwischen Fängermolekühlen 311 auf einer Sensor-Elektrode 301 und zu erfassenden Molekülen kommt es zu einem Sensorsignal an der Sensor-Elektrode 301, welches von dem Auswerte-Schaltkreis 601 ausgewertet wird und als Spannungs-Signal V_{Signal} (bzw. als Strom-Signal I_{Signal}) bereitgestellt wird. Der Auswerte-Schaltkreis 601 ist vorzugsweise innerhalb der Sensor-Anordnung 800 vorgesehen, wobei eine Weiterverarbeitung der Signale (insbesondere Differenzbildung oder Analog-/Digital-Wandlung) mittels einer Signalweiterverarbeitungs-Schaltung 801 bewerkstelligt wird. An einem Ausgang der Signalweiterverarbeitungs-Schaltung ist ein Spannungs-Ausgangssignal Vₒᵤₜ (bzw. ein entsprechendes Strom-Signal Iₒᵤₜ) bereitgestellt, welches von Untergrundsignalen frei ist und ein direktes Maß für die Sensorereignisse an der Sensor-Elektrode 301 darstellt.

Anders ausgedrückt stellt die Sensor-Anordnung 800 eine verallgemeinerte Form der erfindungsgemäßen Vorrichtung dar. Ein wichtiger Aspekt ist ein im Sensorpixel monolithisch integrierter Schaltungsblock 601, der die Signale der Elektroden 302, 603, 301 auswertet und in geeigneter Form zueinander in Beziehung setzt.

Der Sensor kann eine flächige Elektrode sein und auch eine Fingerstruktur aufweisen, wie es bei einem Detektionsverfahren des Redox-Cyclings häufig der Fall ist. Auch Transducer zur Detektion von Biomaterial nach dem Impedanzverfahren können dort verwendet werden. Es kann jeder Transducer verwendet werden, der ein elektrisch auswertbares und verarbeitbares Signal liefert. Dieses Signal kann entweder eine elektrische Spannung oder auch ein elektrischer Strom sein. Das Ausgangssignal des Auswertungs-Blocks 801 kann ebenfalls ein elektrischer Strom oder eine elektrische Spannung sein.

Es ist anzumerken, dass in den bezugnehmend auf Fig.3 bis Fig.8 beschriebenen Ausführungsbeispielen davon ausgegangen worden ist, dass die Elektroden während eines Experiments auf konstantem elektrischen Potential bleiben und der Spannungssprung durch einen Elektrolyten vollführt wird. Somit messen alle Sensoren einer Sensor-Anordnung gleichzeitig und speichern ein Messergebnis in den Integrationskapazitäten. Alternativ kann auch jeder Sensor einzeln angesprochen werden, so dass dann die Sensor-Elektrode einen Spannungssprung durchführt, wohingegen der Elektrolyt auf konstantem Potential verbleibt. Auch Mischformen sind möglich, bei denen sich sowohl das Elektrolytpotential als auch die Sensor-Elektrodenspannung ändert.

Die in Fig.3 bis Fig.7 verwendete Elektrode 302 kann wahlweise von einer Beschichtung mit Fängermolekülen frei sein, kann aber auch mit einer Schicht aus nicht bindungsbereiten Fängermolekülen vorgesehen sein. Ausschlaggebend ist gemäß dieser Ausgestaltung, dass auf der Elektrode 302 kein Sensorereignis stattfindet.

Im Weiteren wird bezugnehmend auch **Fig.9** ein Analog-/Digital-Wandler 900 zum Bilden eines digitalen Sensorsignals aus einem analogen Sensorsignal beschrieben.

An einem ersten Referenzpotential-Anschluss 901 ist das Vollsignal-Vergleichssignal Vₘₐₓ bereitgestellt, an einem zweiten Referenzpotential-Anschluss 902 ist das Nullsignal-Vergleichssignal Vₘᵢₙ bereitgestellt. An einem Analogsignal-Anschluss 903 ist das Sensorsignal V_{Signal} bereitgestellt. Zwischen dem ersten Referenzpotential-Anschluss 901 und dem zweiten Referenzpotential-Anschluss 902 sind eine Vielzahl von ohmschen Widerständen 905 vorgesehen, an denen die Spannung Vₘₐₓ-Vₘᵢₙ sukzessive abfällt. Ferner ist eine Mehrzahl von Komparatoren 906 (Komparator-Kaskade) vorgesehen, wobei an einem nichtinvertierenden Eingang eines jeden Komparators 906 das Sensorsignal V_{Signal} bereitgestellt ist. Der invertierende Eingang 909 von jedem der Komparatoren 906 ist mit einem Anschluss versehen, der zwischen zwei benachbarten Widerständen 105 angeordnet ist. Somit ist an allen nicht-invertierenden Eingängen der Komparatoren 906 das Signal V_{Signal} bereitgestellt, an den anderen Eingängen der Komparatoren 906 fällt das Signal sukzessive von Vₘₐₓ bis Vₘᵢₙ ab. An den Ausgängen der Komparatoren 906 ist basierend auf den Vergleichen der beiden Signale an den Eingängen 908, 909 ein binäres Signal mit einem logischen Wert "1" oder "0" bereitgestellt, sogenannter Thermometercode. Dieser Thermometercode wird mittels eines Thermometer-Binär-Wandlers 907 in ein Binärsignal umgewandelt, d.h. in ein Digitalsignal, welches an dem Digitalsignal-Anschluss 904 bereitgestellt ist.

Anders ausgedrückt zeigt Fig.9 eine Ausführungsform eines Analog-/Digital-Wandlers 900, der direkt an die zuvor vorgestellten Schaltungs-Vorrichtungen 300 bis 800 angeschlossen werden kann. Liegen die Spannungssignale für den Maximal-, den Minimal- und den Mess-Wert vor, so gibt der ADC 900 automatisch ein digitales Wort aus, das direkt dem relativen Messsignal entspricht.

Die im Folgenden beschriebenen Pixelschaltungen sind jeweils unter einer Sensor-Elektrode angeordnet und monolithisch in das Siliziummaterial integriert, so dass die im Folgenden beschriebenen jeweiligen Schaltungskomponenten gebildet werden und miteinander verschaltet sind, so dass die im Folgendem beschriebenen Funktionalitäten gewährleistet sind.

Die im Folgenden beschriebenen Sensor-Anordnungen sind als DNA-Sensoren eingerichtet zum Erfassen von makromolekularen Biopolymeren, wobei zum Erfassen der makromolekularen Biopolymere gemäß diesen Ausführungsbeispielen der Erfindung ein elektrochemisches Verfahren verwendet wird, bei dem ein indirekter Nachweis eines Hybridisierungsereignisses mittels elektrochemischer Markierungen an Signal-Oligomeren oder Fängermolekülen oder Zielmolekülen oder Intercalatoren erfolgt. Intercalatoren sind insbesondere Stoffe, die sich selektiv an bzw. in doppelsträngiger DNA einlagern. Dies erlaubt eine Diskriminierung zwischen Einzelsträngen bzw. Doppelsträngen.

Gemäß dem in [7] beschriebenen Verfahren sind kurzkettige Signal-Oligomere mit den auf den Arbeits-Elektroden immobilisierten Fängermolekülen (Probe-Moleküle) hybridisiert. Anschließend wird die zu analysierende Substanz mit dem elektronischen Chip in Kontakt gebracht und in der zu analysierenden Substanz eventuell vorhandene, zu den jeweiligen Probe-Molekülen, auch bezeichnet als Fängermoleküle, in ihrer Sequenz komplementäre Ziel-Moleküle verdrängen die kurzkettigen Signal-Oligomere. An den Signal-Oligomeren sind üblicherweise Ferrocen-Moleküle als Markierung angebracht. Das elektrochemische System detektiert anschließend das Vorhandensein der Ferrocen-Moleküle an den verschiedenen Sensorpositionen.

In diesem Zusammenhang ist anzumerken, dass die beschriebenen Sensor-Anordnungen für alle Arten von elektrochemischen Experimenten geeignet sind, bei denen eine Oxidation und/oder eine Reduktion von Inhaltsstoffen des Elektrolyten oder von auf der Elektrodenoberfläche immobilisierten Stoffen durchgeführt wird.

Die folgenden Ausführungsformen beschreiben somit ein DNA-Analysesystem für die Chronoamperometrie und Chronocoulometrie, das allgemein in der Lage ist, einen Spannungssprung von mehreren 100 mV (typischerweise 400 mV) innerhalb einer Zeitspanne von weniger als einer Mikrosekunde, prinzipiell aber auch beliebig größeren Zeitspannen, an der jeweiligen Arbeits-Elektrode zu realisieren.

Wegen der oben beschriebenen Zeitanforderungen ist die Verwendung einer makroskopischen Potentiostaten-Schaltung gerade für sehr kleine Elektrodenflächen, d.h. für Elektroden mit sehr geringer Oberfläche, nicht möglich, da Verdrahtungskapazitäten und Gerätekapazitäten die erforderliche Signalbandbreite nicht zulassen. Da bei dem im Folgenden beschriebenen erfindungsgemäßen DNA-Analysesystem die Betriebsschaltungen unmittelbar unterhalb der Elektrode in einem Pixel angeordnet sind, reduziert sich die parasitäre Kapazität, welche die Arbeits-Elektrode treiben muss, erheblich und es können sehr kurze Sprungzeiten erreicht werden.

Kurze Sprungzeiten sind erforderlich, da in diesem Fall leicht zwischen unmittelbar auf der Elektrode vorhandenen elektrochemisch aktiven Stoffen und diffusiven Beiträgen zum Oxidationsstrom bzw. zum Reduktionsstrom unterschieden werden kann. Die unmittelbar auf der jeweiligen Elektrode vorhandenen Stoffe werden innerhalb kürzester Zeit oxidiert bzw. reduziert, während die in dem Analyten vorhandenen freien Stoffe aufgrund ihrer spezifischen Diffusionskonstanten wesentlich später zum Signalstrom beitragen.

Bei einem Spannungssprungexperiment teilt sich der Strom an den Arbeits-Elektroden im Wesentlichen in drei Beiträge auf:
- Umladung der Doppelschichtkapazität:
   Die Doppelschichtkapazität ist immer zu beachten, wenn eine leitfähige Elektrode mit einem Elektrolyten in Kontakt steht. In unmittelbarer Nähe zur Elektrodenoberfläche ordnen sich Ionen in im Wesentlichen zwei Schichten an. Dieses Schichtsystem kann als (Elektrolyt-)Kondensator aufgefasst werden, bei dem die beiden Kondensatorplatten lediglich wenige Moleküle voneinander entfernt sind. Aufgrund dieser Tatsache weist der (Elektrolyt-)Kondensator außerordentlich hohe Werte für die Flächenkapazität auf. Typischerweise werden Werte von 0,1 F/m² erreicht.
   Bezüglich des erfindungsgemäßen DNA-Sensors zeigt sich, dass die Ladungsmenge, die in die Doppelschichtkapazität fließt, in der gleichen Größenordnung ist wie die Ladungsmenge, die zur Oxidation des Ferrocens aufgebracht wird.
- Oxidation des Ferrocens:
   Das auf der Elektrodenoberfläche vorhandene Ferrocen wird bei einem effektiv positiven Spannungssprung an der Arbeits-Elektrode unmittelbar oxidiert. Da die hybridisierten Moleküle nur höchstens wenige Nanometer von der Oberfläche entfernt sind, erfolgt die Oxidation dieser Moleküle nahezu vollständig innerhalb der Sprungzeit der Spannung. Messtechnisch überlagert sich dieser Strombeitrag also direkt mit dem Ladestrom der Doppelschichtkapazität.
- Oxidation diffundierender Ferrocen-Moleküle:
   In dem Analyten befindet sich eine nennenswerte Konzentration an Ferrocen-Molekülen, unter anderem jene, die von den Fängermolekülen verdrängt wurden. Diese Moleküle diffundieren aus der Lösung an die Elektrode und führen zu einem elektrischen Stromfluss, der nach dem Spannungsstrom langsam abklingt.

Das primäre Messsignal in diesem Fall ist der Strom, der an der Elektrode während des Spannungssprungs fließt. Die messtechnisch relevante Größe ist jedoch die Ladungsmenge, die zur Stabilisierung der Elektrodenspannung benötigt wird. Diese Ladungsmenge ist ein direktes Maß für die absolute Menge an Ferrocen, welche oxidiert wurde. Vorzugsweise ist für diesen Fall in der Sensor-Anordnung ein Integrator vorgesehen, der den jeweiligen Elektrodenstrom integriert.

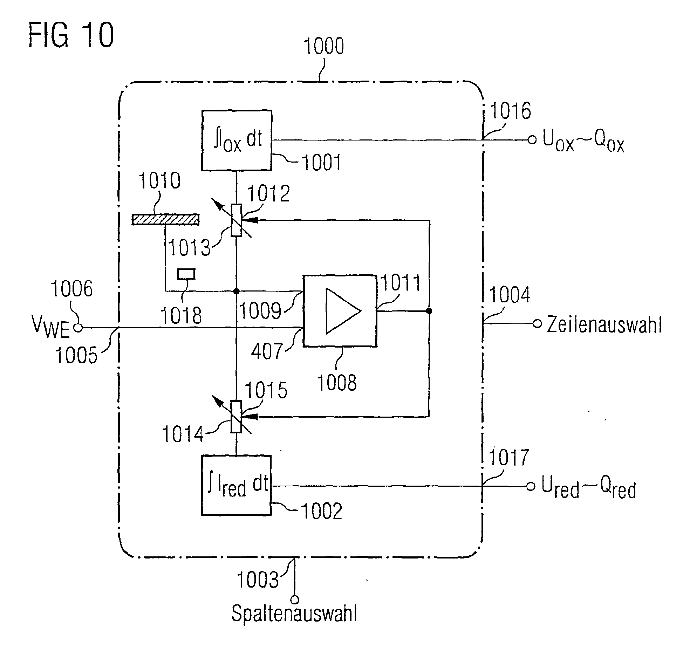

Wie in **Fig.10** in der Pixelschaltung 1000 gezeigt ist, ist der jeweilige Integrator 1001, 1002 direkt in einem jeweiligen Sensorpixel enthalten. Die im Folgenden beschriebenen Pixelschaltungen sind jeweils so zu verstehen, dass jede Pixelschaltung örtlich unterhalb bzw. in unmittelbarer Nähe einer jeweiligen Arbeits-Elektrode angeordnet und mit dieser elektrisch gekoppelt ist zum Erfassen an der Arbeits-Elektrode jeweils auftretender Sensorereignisse.

Die Pixelschaltung 1000 gemäß Fig. 10 weist neben einem Oxidations-Integrator 1001 und einem Reduktions-Integrator 1002 drei Eingänge 1003, 1004, 1005 sowie zwei Ausgänge 1016, 1017 auf.

Ein erster Eingang 1003, auch bezeichnet als Spaltenauswahl-Eingang ist mit einer Spaltensteuer-Einheit gekoppelt. Über den Spaltenauswahl-Eingang 1003 wird der Pixelschaltung 1000 das Spaltenauswahl-Signal zugeführt.

Ein zweiter Eingang 1004, auch bezeichnet als Zeilenauswahl-Eingang 1004, ist mit einer Zeilensteuer-Einheit gekoppelt und dient zur Zuführung des Zeilenauswahl-Signals an die Pixelschaltung 1000.

Ferner ist ein dritter Eingang 1005 vorgesehen zum Zuführen eines Referenzpotentials V_{WE} 1006 einem ersten Eingang 1007 eines ebenfalls in der Pixelschaltung 1000 vorgesehenen Operationsverstärkers 1008. Der zweite Eingang 1009 des Operationsverstärkers 1008 ist mit der Arbeits-Elektrode 1010 der jeweiligen Pixelschaltung 1000 gekoppelt.

Der Ausgang 1011 des Operationsverstärkers 1008 ist mit einem Steuereingang 1012 zum Verändern eines elektrischen Widerstandes eines ersten regelbaren elektrischen Widerstands 1013, dessen einer Anschluss mit dem Eingang des Oxidations-Integrators 1001 gekoppelt ist und dessen anderer Anschluss mit dem zweiten Eingang 1009 des Operationsverstärkers 1008 sowie mit der Arbeits-Elektrode 1010 und mit einem ersten Anschluss eines zweiten regelbaren Widerstands 1014 gekoppelt ist, dessen zweiter Anschluss mit dem Eingang des Reduktions-Integrators 1002 gekoppelt ist. Der Steueranschluss 1015 des zweiten regelbaren Widerstands 1014 ist ebenfalls mit dem Ausgang 1011 des Operationsverstärkers 1008 gekoppelt. Der Ausgang des Oxidations-Integrators 1001 ist mit einem ersten Ausgang 1016 der Pixelschaltung 1000 gekoppelt und der Ausgang des Reduktions-Integrators 1002 ist mit einem zweiten Ausgang 1017 der Pixelschaltung 1000 gekoppelt. Der durch die Arbeits-Elektrode fließende Elektrodenstrom 1018 wird mittels der Integratoren 1001 bzw. 1002 integriert. Die sich ergebende elektrische Spannung Uₒₓ am Ausgang des Oxidations-Integrators 1001 bzw. U_{red} am Ausgang des Reduktions-Integrators 1002 ist proportional zu der jeweiligen Oxidations-Ladungsmenge bzw. Reduktions-Ladungsmenge als messtechnisch relevante Größe.

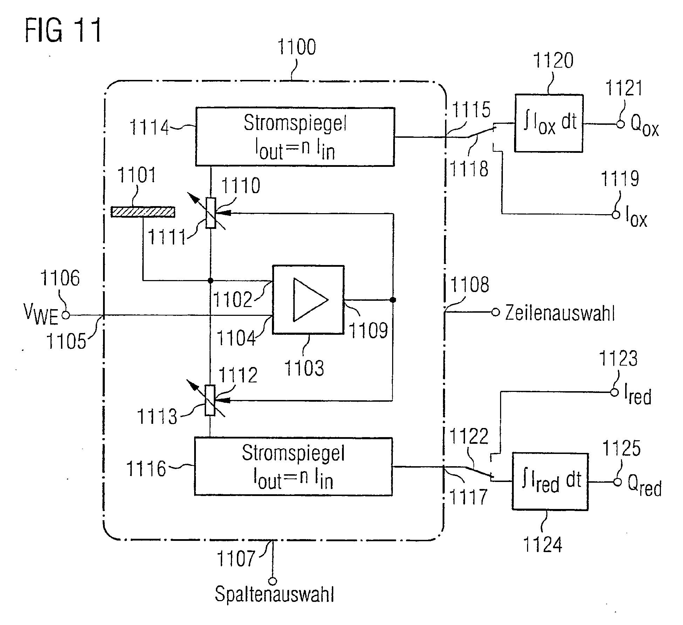

Gemäß einer alternativen Ausgestaltung ist der jeweilige Integrator außerhalb der Pixelschaltung vorgesehen, wie beispielsweise in der Pixelschaltung 1100 in **Fig.11** gezeigt.

Auch bei der Pixelschaltung 1100 gemäß Fig.11 ist die Arbeits-Elektrode 1101 mit einem ersten Eingang 1102 eines Operationsverstärkers 1103 gekoppelt, dessen zweiter Eingang 1104 mit einem dritten Eingang 1105 der Pixelschaltung 1100 gekoppelt ist zum Zuführen des Referenzpotentials V_{WE} 1106.

Die Pixelschaltung 1100 weist ferner einen Spaltenauswahl-Eingang 1107 sowie einen Zeilenauswahl-Eingang 1108 auf, wobei der Spaltenauswahl-Eingang 1107 mit der Spaltensteuerungseinheit und der Zeilenauswahl-Eingang 1108 mit der Zeilensteuerungseinheit eines matrixförmigen Arrays von Pixelschaltungen gekoppelt ist.

Der Ausgang 1109 des Operationsverstärkers 1103 ist mit einem Steueranschluss 1110 eines ersten regelbaren Widerstands 1111 gekoppelt sowie mit einem Steueranschluss 1112 eines zweiten regelbaren Widerstands 1113.

Der erste regelbare Widerstand 1111 ist mit dessen ersten Anschluss mit einem Eingang einer ersten Stromspiegelschaltung 1114 gekoppelt, deren Ausgang mit einem ersten Ausgang 1115 der Pixelschaltung 1100 gekoppelt ist. Der zweite Anschluss des ersten regelbaren Widerstands 1111 ist mit der Arbeits-Elektrode 1101 sowie mit dem zweiten Eingang 1102 des Operationsverstärkers 1103 gekoppelt sowie mit einem ersten Anschluss des zweiten regelbaren Widerstands 1113, dessen zweiter Anschluss mit einem Eingang einer zweiten Stromspiegelschaltung 1116 gekoppelt ist, deren Ausgang wiederum mit einem zweiten Ausgang 1117 der Pixelschaltung 1100 gekoppelt ist.

Der von der ersten Stromspiegelschaltung 1114 mit dem Stromspiegelparameter n multiplizierte verstärkte, durch die Arbeits-Elektrode 1101 fließende elektrischer Strom wird als verstärkter Oxidationsstrom an dem ersten Ausgang 1115 bereitgestellt und je nach Schalterposition eines ersten Schalters 1118 direkt zur Weiterverarbeitung als erstes Strom-Ausgangssignal Iₒₓ 1119 bereitgestellt oder einem Oxidations-Integrator 1120 zugeführt, welcher aus dem verstärkten Oxidationsstrom die Oxidations-Spannung Uₒₓ 1121 bildet, welche proportional ist zu der Oxidations-Ladungsmenge Qₒₓ.

An dem zweiten Ausgang 1117 wird ein verstärkter Reduktionsstrom in entsprechender Weise, multipliziert mit dem Faktor n der zweiten Stromspiegelschaltung 1116, bereitgestellt und je nach Schalterposition eines zweiten Schalters 1122 direkt als Reduktions-Ausgangs-Strom I_{red} 1123 oder einem Reduktions-Integrator 1124, welcher eine Reduktions-Ausgangsspannung U_{red} 1125 bereitstellt, welche proportional ist zu der Reduktions-Ladungsmenge Q_{red}.

In diesem Fall wird der jeweils aktive ausgewählte Sensor, d.h. die jeweilige ausgewählte Pixelschaltung 1100 mittels einer Auswahllogik (in Fig.11 repräsentiert durch die symbolischen Schalter 1118 und 1122) mit dem jeweiligen zentralen Integrator (Oxidations-Integrator 1120 bzw. Reduktions-Integrator 1124) verbunden und der entsprechend fließende Strom wird gemessen.

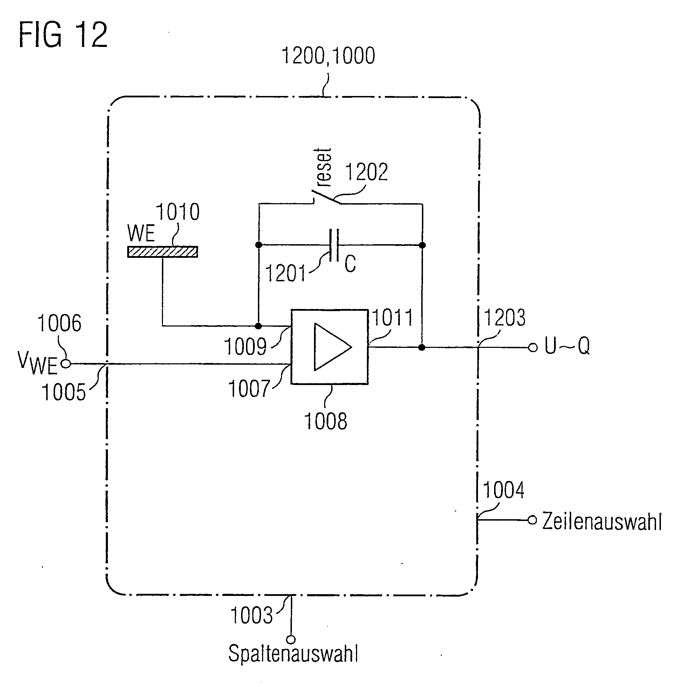

Ist der Integrator in der Pixelschaltung enthalten, wie beispielsweise in der Pixelschaltung 1200 in **Fig.12** dargestellt, so arbeiten die Pixelschaltungen 1200 autark und es können prinzipiell alle Sensoren eines Arrays auf einmal ausgewertet werden.

Die Abfrage der Integratorergebnisse kann nach dem jeweiligen Spannungssprungexperiment sukzessive mittels einer geeigneten Auswahllogik erfolgen.

Fig.12 zeigt in vereinfachter Darstellung die Pixelschaltung 1000 gemäß Fig.10, wobei lediglich dargestellt ist, dass der erste Eingang 1007 des Operationsverstärkers 1008 mit dem dritten Eingang 1005 der Pixelschaltung 1000 gekoppelt ist sowie die Arbeits-Elektrode mit dem zweiten Eingang 1009 des Operationsverstärkers 1008.

Ferner ist ein Rückkoppelkondensator 1201 dargestellt, dessen erster Anschluss mit dem Ausgang 1011 des Operationsverstärkers 1008 gekoppelt ist und dessen zweiter Anschluss rückgekoppelt ist zu dem zweiten Eingang 1009 des Operationsverstärkers 1008. Ein Rücksetzschalter 1202 ist parallel geschaltet zu dem Rückkoppelkondensator 1201 und gekoppelt mit einerseits dem zweiten Eingang 1009 des Operationsverstärkers 1008 sowie andererseits dem Ausgang 1011 des Operationsverstärkers 1008, welcher mit dem Ausgang 1203 der Pixelschaltung 1200 gekoppelt ist und an dem das zu der Ladungsmenge proportionale Ausgangs-Spannungssignal bereitgestellt wird.

Insbesondere kann die Arbeits-Elektrodenschaltung derart eingerichtet sein, dass die Ladungsmenge aus der Doppelschichtkapazität, die keine Information aufgrund einer Funktionalisierung trägt, kompensiert werden kann. In diesem Fall ist in dem Sensor-Array eine Elektrode vorhanden, die nicht funktionalisiert ist, d.h. auf der keine Fängermoleküle immobilisiert sind und die somit ausschließlich die Ladung aus der Doppelschichtkapazität und den diffusiven Anteil misst.

Der elektrische Strom, der durch diese zusätzliche Elektrode während des Spannungssprungexperiments fließt oder die integrierte elektrische Ladung kann jeweils von den Signalen der aktiven Sensoren abgezogen werden, so dass diese Pixelschaltungen nur noch das messtechnisch relevante Ladungssignal bzw. Stromsignal liefern.

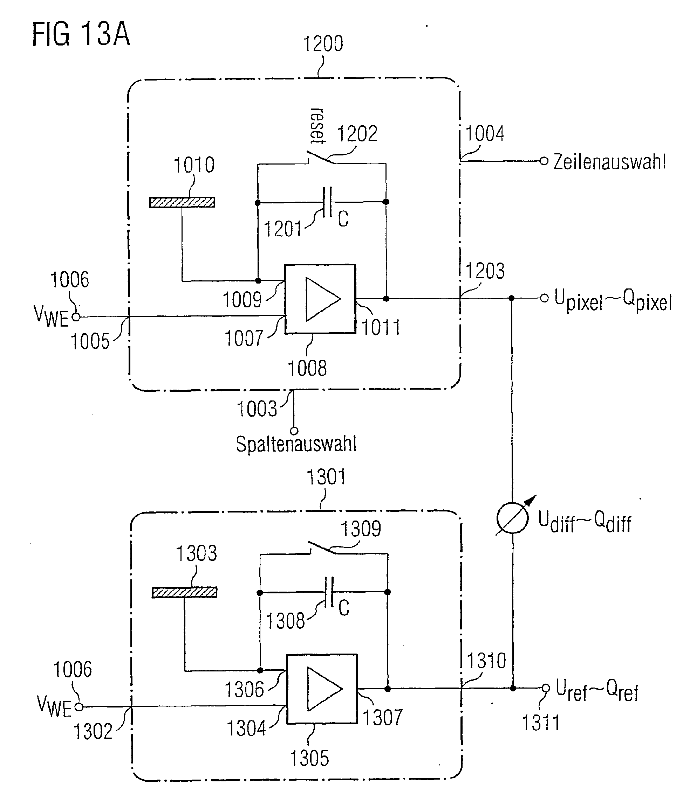

In **Fig.13A** ist ein solches Ausführungsbeispiel gezeigt, wobei die Pixelschaltung gemäß der in Fig.12 gezeigten Ausführungsform ausgebildet ist.

Wie in Fig.13A dargestellt ist, ist gemäß dieser Ausführungsform eine Referenzschaltung 1301 vorgesehen mit einem Eingang 1302, an dem das Referenzpotential V_{WE} bereitgestellt ist. Ferner ist eine Referenz-Arbeits-Elektrode 1303 vorgesehen, auf der keine Fängermoleküle immobilisiert sind bzw. die mit einer nicht bindungsbereiten Beschichtung versehen ist.

Der Eingang 1302 der Referenzschaltung 1301 ist mit einem ersten Eingang 1304 eines Referenz-Operationsverstärkers 1305 gekoppelt, dessen zweiter Eingang 1306 mit der Referenz-Arbeitelektrode 1303 gekoppelt ist. Ein Ausgang 1307 des Referenz-Operationsverstärkers ist über einen Referenz-Kondensator 1308 an den zweiten Eingang 1306 des Referenz-Operationsverstärkers 1305 rückgekoppelt sowie gegebenenfalls über einen Referenz-Rücksetzschalter 1309 zum Rücksetzen des Integrators mit dem zweiten Eingang 1306 des Referenz-Operationsverstärkers 1305 kurzgeschlossen. Ein Ausgang 1310 der Referenzschaltung 1301 liefert das integrierte Referenzsignal U_{ref} 1311. Als Messsignal für die elektrochemischen Umsetzungen an der Arbeits-Elektrode 1010 des jeweiligen Pixels wird die Differenz zwischen den Ausgangsspannungen der beiden Integratoren, d.h. die Differenz der von der Pixelschaltung 1200 bereitgestellten Ausgangsspannung und der Referenz-Ausgangsspannung, welche an dem Ausgang 1310 der Referenzschaltung bereitgestellt wird, herangezogen.

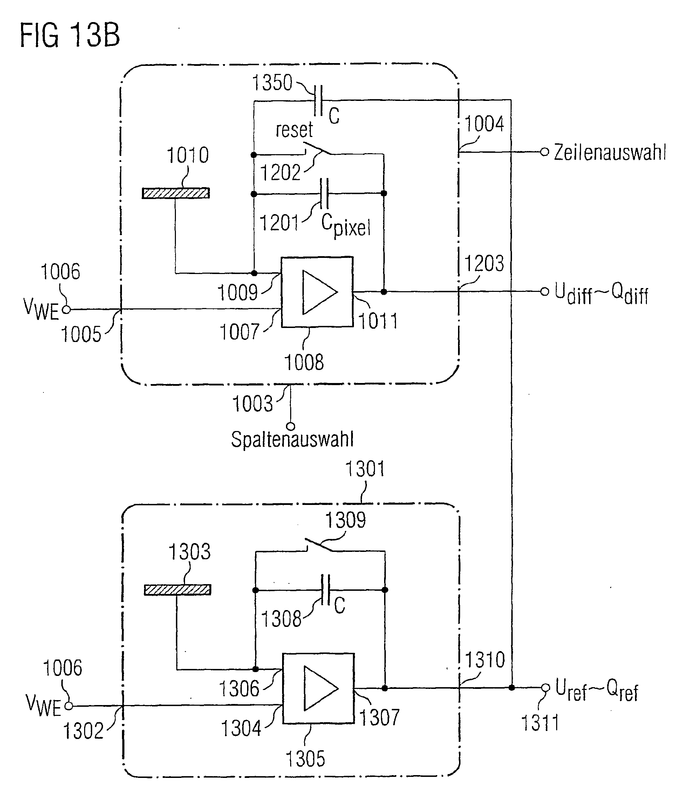

Die in **Fig.13B** gezeigte Ausführungsform unterscheidet sich von der in Fig.13A gezeigten Ausführungsform dadurch, dass ein zentrales Referenzpixel vorgesehen ist, welches ein Referenz-Spannungssignal generiert, das über einen Koppelkondensator 1350, welcher geschaltet ist zwischen den Ausgang der zentralen Referenzschaltung 1301, welche den gleichen Aufbau hat wie die Referenzschaltung 1301 gemäß Fig.13A, welche in jedem Pixel vorgesehen ist, und dem zweiten Eingang 1009 des jeweiligen Operationsverstärkers 1008 in der Pixelschaltung 1200. Das in diesem Fall zentrale Referenz-Spannungssignal U_{ref} 1311 wird somit über den Koppelkondensator 1350 auf alle aktiven Sensor-Elektroden zurückgekoppelt und die Doppelschicht-Kapazität und die diffusiven Umsetzungen werden exakt eliminiert.

Das Ausgangssignal der jeweiligen Pixelschaltung 600 gibt daher direkt nur noch das Signal der elektrochemischen Umsetzungen aufgrund der Funktionalisierung der Elektroden aus. Dies ermöglicht eine sehr empfindliche Messung der an dem jeweiligen Sensor, d.h. an der Arbeits-Elektrode auftretenden Ladungsmengen.

Treten die elektrischen Ladungen, die aus den Oxidationsvorgängen oder den Reduktionsvorgängen stammen, zeitlich deutlich später auf als die Dauer des Spannungssprungs, so können die elektrischen Ladungsträger aus dem Laden der Doppelschichtkapazität auf das verspätete Aktivieren des Integrators ausgeblendet werden.

Der jeweilige Integrator wird also erst eingeschaltet in diesem Fall bzw. freigegeben, wenn die Spannung an der Arbeitelektrode bzw. an den Arbeits-Elektroden den Zielwert erreicht hat und die messtechnisch relevanten elektrochemischen Umsetzungen erfolgen.

Es hat die Betriebsschaltung der Arbeits-Elektroden die Aufgabe, das Elektrodenpotential konstant zu halten und den durch die Arbeits-Elektroden fließenden Strom und/oder die Ladung bei einem oxidativen Spannungsstrom und/oder reduktiven Spannungsstrom zu messen. Hierzu ist in der Pixelschaltung eine Differenzstufe vorgesehen, die das Elektrodenpotential mit einem Sollpotential vergleicht und dem zum Halten der elektrischen Spannung notwendigen Strom misst und/oder die Ladungsmenge speichert. Da der elektrische Strom aufgrund des schnellen Spannungssprungs bei großen/kleinen Elektroden sehr große/kleine Werte annehmen kann, ist es zweckmäßig, den Elektrodenstrom vor einer Weiterverarbeitung mittels Stromspiegelschaltungen derart zu verstärken bzw. zu teilen, dass der Strom für die vorzugsweise eingesetzte integrierte CMOS-Schaltungstechnik übliche und mittels üblicher digitaler Schaltungen weiterverarbeitbare Werte annimmt.

Die in den Ausführungsformen beschriebenen Stromspiegel weisen daher den Teilungsfaktor/Verstärkungsfaktor n auf. Der Ausgangsstrom der Stromspiegelschaltungen beträgt also das n-fache des Eingangsstroms der Stromspiegelschaltungen. n kann kleiner als 1 sein (beispielsweise 1/100, 1/10 für vergleichsweise große Elektroden) oder größer als 1 sein (10, 100 für vergleichsweise kleine Elektroden).

Zur Messung oxidativer Signale sowie reduktiver Signale sind zwei komplementäre Strompfade notwendig, die den jeweiligen Elektrodenstrom aufnehmen bzw. liefern können, wie beispielsweise in der Pixelschaltung 1100 in Fig.11 gezeigt.

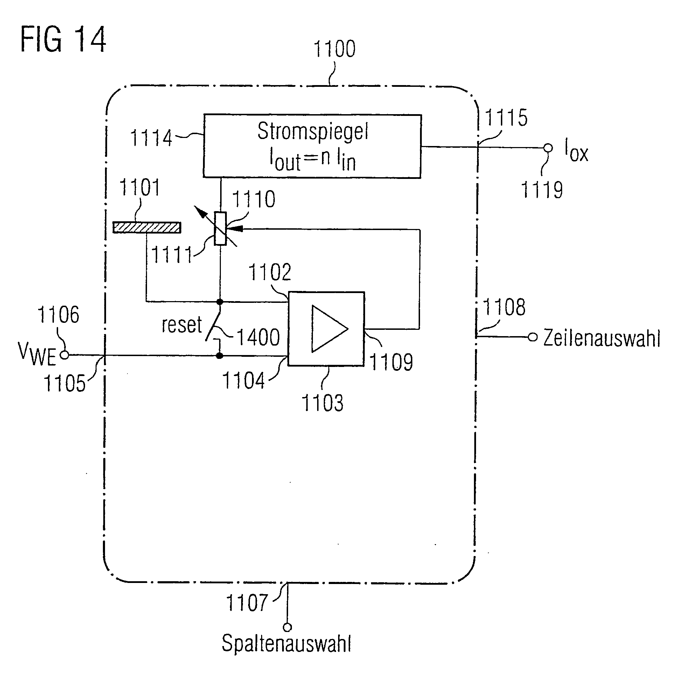

Üblicherweise ist jedoch lediglich eines der beiden elektrochemischen Signale (Oxidation/Reduktion) messtechnisch relevant, weshalb lediglich nur ein Zweig, in vereinfachter Darstellung beispielsweise in Fig.12 gezeigt, vorgesehen ist. Zur Vereinfachung und Miniaturisierung der Pixelschaltungen kann daher einer der Stromzweige in einer Pixelschaltung durch einen einfachen Schalter 1400 (vgl. **Fig.14**) ausgeführt sein, der vor der eigentlichen Messung die Arbeits-Elektrode 1101 mit dem Sollpotential, d.h. den dritten Eingang 1105 der Pixelschaltung 1100 verbindet und einen eventuell fließenden elektrischen Strom an diese Spannungsquelle abführt.

Es ist ferner wünschenswert, dass die Betriebsschaltung der Arbeits-Elektroden einen sehr hohen Dynamikbereich für den Elektrodenstrom aufweist.

Während des Spannungssprungs treten kurzzeitig sehr große elektrische Ströme auf (Doppelschichtkapazität, Oxidationssignal). Sowohl dieser große Impulsstrom als auch der anschließende kleine Strom aus weiteren Oxidationsprozessen müssen von der Betriebsschaltung der Arbeits-Elektroden korrekt gemessen werden.

Aus diesem Grund sind sehr präzise Stromspiegelschaltungen wünschenswert. Eine hohe Genauigkeit der Stromspiegelschaltungen kann durch großflächige Stromspiegelschaltungen erreicht werden, damit prozesstechnisch bedingte statistische Schwankungen der Bauteilparameter der Stromspiegelschaltungen einen bestimmten Wert nicht überschreiten. Da großflächige Transistoren, die eine Stromspiegelschaltung bilden, auch eine große parasitäre Kapazität aufweisen, wäre die Genauigkeit der in der Pixelschaltung integrierten Stromspiegelschaltung begrenzt, da diese Kapazität ebenfalls von dem Elektrodenstrom aufgeladen werden muss. Die Ladungsmenge erscheint nicht oder erst sehr spät an dem Ausgang der Stromspiegelschaltung und steht somit nicht für die Integration zur Verfügung.

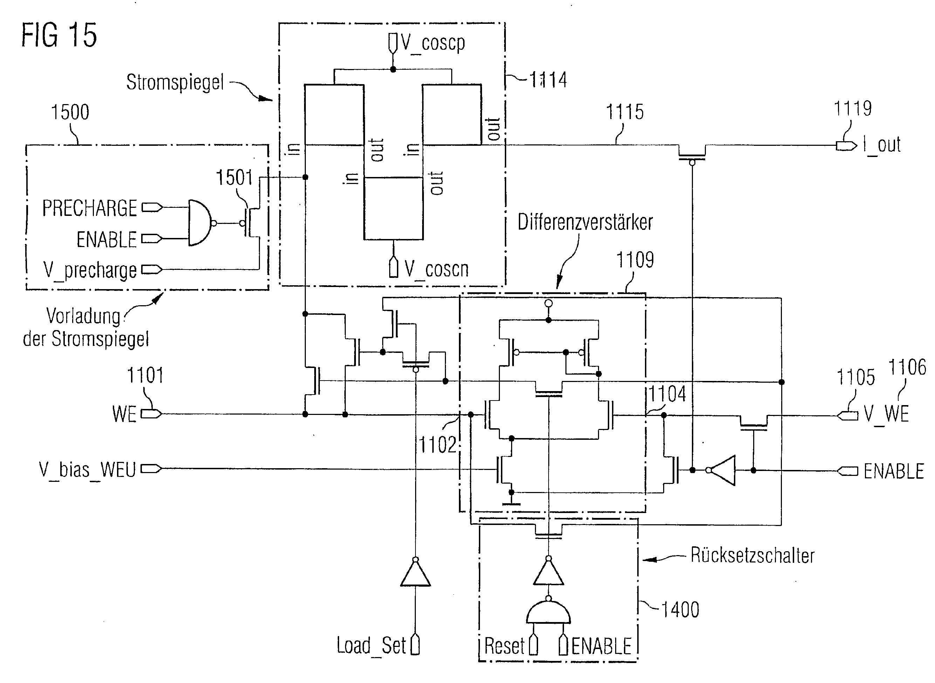

Für eine hohe Genauigkeit und Messgeschwindigkeit ist es zweckmäßig, die Stromspiegeleinheiten in der Sensor-Pixelschaltung vor dem Spannungssprung vorzuladen. Dies kann mittels eines Schalttransistors 1501 einer Vorladeeinheit 1500 (vgl. **Fig.15**), welche mit der ersten Stromspiegelschaltung 1114 gekoppelt ist, erfolgen, wobei der Schalttransistor 1401 einen geeigneten Strom in die erste Stromspiegelschaltung 1114 einprägt und kurz vor dem Spannungssprung wieder ausgeschaltet wird.

In einer optionalen Ausführungsform können, wie in Fig.15 dargestellt, zusätzliche Schalt-Elemente vorgesehen sein, welche zum Einstellen der Flankensteilheit vorteilhaft sind.

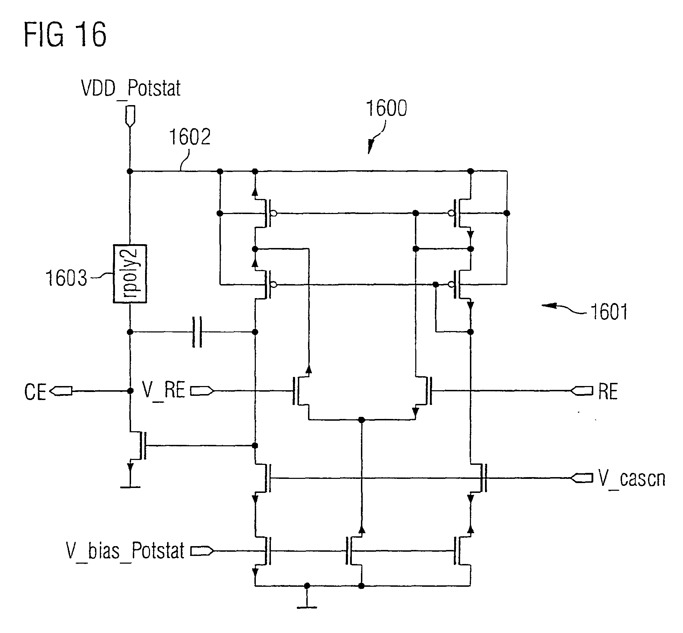

Die in **Fig.16** dargestellte Potentiostaten-Schaltung 1600 dient zur Kontrolle des Elektrolytpotentials.

Hierzu ist im Reaktionsvolumen eine Referenz-Elektrode angebracht, die das Elektrolytpotential misst, mit einer Referenzspannung vergleicht und über eine großflächige Gegen-Elektrode des Elektrolytpotentials geeignet einstellt.

Da die Potentiostaten-Schaltung 1600 in erfindungsgemäßen Messverfahren das Potential des Elektrolyten sprunghaft ändern muss, weist diese erfindungsgemäß eine hohe Signalbandbreite sowie eine hohe Stromtreibfähigkeit auf.

Da das elektrochemische System Referenz-Elektrode/Elektrolyt/Gegen-Elektrode komplexe und zudem von den Inhaltstoffen des Elektrolyten abhängige elektrische Eigenschaften aufweist, ist es notwendig, die Potentiostaten-Schaltung 1600 zur Vermeidung von Oszillationen elektrisch sehr stabil auszuführen.

Dies wurde gemäß dieser Ausgestaltung des Aspekts der Erfindung dadurch gelöst, dass ein zweistufiger Operationsverstärker 1601 verwendet wird, der im positiven Ausgangszweig 1602 einen ohmschen Widerstand 1603 aufweist. Dies reduziert zwar einerseits die Verstärkung des Operationsverstärkers 1601, erlaubt jedoch einen stabilen Betrieb bis zu hohen Frequenzen bei gleichzeitig hohen Ausgangsströmen für kapazitive Lasten.

Um eine steile Flanke beim Spannungssprung zu erreichen, wird die analoge Sprungspannung nicht von außerhalb des elektronischen Chips bereitgestellt, sondern die beiden elektrischen Potentiale liegen als stabiles Gleichspannungssignal an dem elektronischen Chip an. Nach einem Trigger-Impuls wird die Eingangsspannung an der Potentiostaten-Schaltung 1600 zwischen den beiden Gleichspannungssignal-Werten umgeschaltet. Die Umschaltung kann sehr schnell erfolgen und benötigt lediglich ein TTL-Signal (**T**ransistor-**T**ransistor-**L**ogik-Signal).

Werden die erfindungsgemäßen Sensoren in einem Array angeordnet, so werden die einzelnen Sensoren mittels Zeilenleitungen und Spaltenleitungen adressiert. Somit können die einzelnen Sensoren selektiv angesteuert und/oder ausgelesen werden.

Im Zusammenhang mit den oben beschriebenen Messprinzipien können alle Verschaltungen der Sensorpixel eingesetzt werden, wie sie beispielsweise im Zusammenhang mit Redox-Cycling-Sensoren an sich bekannt sind.

Für den Fall, dass in einem jeweiligen Sensorpixel kein Integrator vorgesehen ist, wird der im aktiven Pixel gemessene und konditionierte elektrische Strom über Zeilenleitungen oder Spaltenleitungen an den Rand des Sensor-Arrays geleitet und kann dort nach weiterer Signalverarbeitung in analoger Signalform oder in digitaler Signalform aus dem elektronischen Chip geleitet werden oder analog oder digital integriert werden.

Das Sensor-Array wird auf diese Weise sukzessive ausgelesen. Da eine einzelne Messung lediglich eine Zeit in der Größenordnung einer von 1 ms benötigt, kann das gesamte Sensor-Array vergleichsweise zügig ausgelesen werden. Insbesondere können mehrere Sensorpixel gleichzeitig aktiviert werden, wenn die entsprechende Anzahl von Komparatoren vorhanden ist.

Vorzugsweise wird eine gesamte Spalte oder Zeile aktiviert und das Sensorsignal am Rande der Matrix erfasst. Bei allen inaktiven Sensorpixeln wird die Elektrode stromlos geschaltet bzw. deren Spannung gegenüber dem Elektrolytpotential derart gewählt, dass an dieser Elektrode keine unerwünschten elektrochemischen Umsetzungen stattfinden.

Ist in den Sensorpixeln jeweils ein Integrator enthalten, so können im Prinzip alle Sensorpixel gleichzeitig aktiviert werden und in einem folgenden Zeitintervall die Integrationsergebnisse sukzessive mittels Auswahlleitungen von den einzelnen Pixeln abgefragt werden.

In der Peripherie der Sensormatrix befinden sich weitere elektronische Schaltungen zum elektrochemischen Betrieb des Sensors wie beispielsweise die Potentiostaten-Schaltungen sowie Auswerteschaltungen für die analogen Messsignale und/oder digitalen Messsignale, beispielsweise Analog-/Digital-Wandler sowie ferner digitale Schaltungen und analoge Schaltungen zur Ansteuerung des Sensor-Arrays.

Besonders vorteilhaft ist eine vollständig digitale Kommunikation zwischen dem erfindungsgemäßen elektrochemischen Analysesystem, d.h. Sensor-Anordnung und einem peripheren Lesegerät.

In diesem Fall ist insbesondere zusätzlich ein Analog-/Digital-Wandler zur Umwandlung des analogen Messsignals in ein digitales Datensignal sowie ein Digital-/Analog-Wandler zur Erzeugung der benötigten Elektrodenspannung in der Sensor-Anordnung vorgesehen und in dieser monolithisch integriert. Ferner ist in diesem Fall eine Recheneinheit zur digitalen Kommunikation mit dem Lesegerät sowie eine Kommunikations-Schnittstelle an der Sensor-Anordnung vorgesehen zur bidirektionalen Datenkommunikation mit dem Lesegerät.

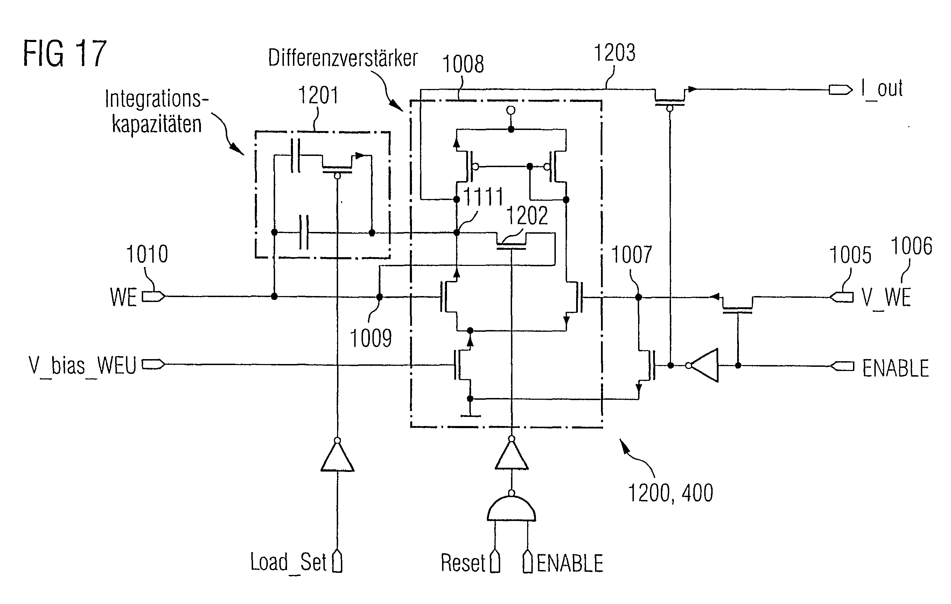

**Fig.17** zeigt eine schaltungstechnische Realisierung der Pixelschaltung 1200 gemäß Fig.12.

In diesem Dokument sind folgende Veröffentlichungen zitiert:
[1] Hofmann, F et al. "Passive DNA Sensor with Gold Electrodes Fabricated in a CMOS Backend Process" Proc. ESSDERC 2002, Digest of Tech. Papers, Seiten 487 bis 490.
[2] Thewes, R et al. "Sensor Arrays for Fully Electronic DNA Detection on CMOS", ISSCC, Digist of Tech. Papers, 2002, Seiten 350 bis 351.
[3] Hintsche, R et al. "Microelectrode arrays and application to biosensing devices", Biosensors & Bioelectronics, Vol. 9, Seiten 697 bis 705, 1994.
[4] Hintsche, R et al. "Microbiosensors Using Electrodes Made in Si-Technology", Frontiers in Biosensorics, Fundamental Aspects, F. W. Scheller et al. (eds.), Dirk Hauser Verlag, Basel, Seiten 267 bis 283, 1997.
[5] Paeschke, M. et al., "Voltametric Multichannel Measurements Using Silicon Fabricated Microelectrode Arrays", Electroanalysis, 1996, Vol. 7, No. 1, Seiten 1-8.
[6] Erhältlich im Internet am 31.03.2004 unter der URL-Adresse: http://www.combimatrix.com
[7] Erhältlich im Internet am 31.03.2004 unter der URL-Adresse: http://www.frizbiochem.com
[8] DE 100 58 397 A1
[9] WO 03/046209 A2
[10] WO 02/097413 A2
[11] US 2004/0072223 A1
[12] A.J. Bard, L.R. Faulkner, "Electrochemical Methods. Fundamentals and Applications", John Wiley & Sons, 1980, Seite 559.
[13] U. Tietze, Ch. Schenk, "Halbleiterschaltungstechnik", Springer Verlag Berlin, 11. Auflage, 1999, S. 954-955.
[14] M. Schienle et al., "A Fully Electronic DNA Sensor with 128 Positions and In-Pixel A/D Conversion", 2004 IEEE International Solid-State Circuits Conference (IEEE Cat. No. 04CH37519), IEEE Piscataway, NJ, USA, Bd. 1, Februar 2004 (2004-02), Seiten 220-524, XP002352039 ISBN: 0-7803-8267-6.

### Bezugszeichenliste

- 100: Redox-Cycling-Sensor-Anordnung
- 101: erste Gold-Arbeitselektrode
- 102: zweite Gold-Arbeitselektrode
- 103: Substrat
- 104: DNA-Fängermoleküle
- 105: Analyt
- 106: erste DNA-Halbstränge
- 107: zweite DNA-Halbstränge
- 108: redoxaktive Markierung
- 109: Zusatzmoleküle
- 110: reduzierte Moleküle
- 111: oxidierte Moleküle
- 200: Interdigitalelektroden-Anordnung
- 201: Generatorelektrode
- 202: Kollektorelektrode
- 203: Referenzelektrode
- 204: Gegenelektrode
- 205: Substrat
- 206: Komparator
- 207: erstes Amperemeter
- 208: zweites Amperemeter
- 300: Sensor-Anordnung
- 301: Sensor-Elektrode
- 302: Vergleichs-Elektrode
- 303: Auswerte-Schaltkreis
- 304: Operationsverstärker
- 305: erste Kapazität
- 306: zweite Kapazität
- 307: erstes Schalt-Element
- 308: zweites Schalt-Element
- 309: drittes Schalt-Element
- 310: viertes Schalt-Element
- 311: DNA-Halbstränge
- 312: Masse-Anschluss
- 400: Sensor-Anordnung
- 401: erster Komparator
- 402: zweiter Komparator
- 403: fünftes Schalt-Element
- 404: sechstes Schalt-Element
- 405: siebtes Schalt-Element
- 406: Auswerte-Schaltkreis
- 407: dritte Kapazität
- 500: Sensor-Anordnung
- 501: Auswerte-Schaltkreis
- 502: Operationsverstärker
- 600: Sensor-Anordnung
- 601: Auswerte-Schaltkreis
- 602: signalgebende Schicht
- 603: Zusatz-Vergleichs-Elektrode
- 604: vierte Kapazität
- 700: Sensor-Anordnung
- 701: Auswerte-Schaltkreis
- 702: Zusatz-Sensor-Elektrode
- 703: DNA-Halbstränge
- 800: Sensor-Anordnung
- 801: Signalweiterverarbeitungs-Schaltung
- 900: Analog-Digital-Wandler
- 901: erster Referenzpotential-Anschluss
- 902: zweiter Referenzpotential-Anschluss
- 903: Analogsignal-Anschluss
- 904: Digitalsignal-Anschluss
- 905: Widerstände
- 906: Komparatoren
- 907: Thermometer-Binär-Wandler
- 908: erster Komparator-Eingang
- 909: zweiter Komparator-Eingang
- 1000: alternative Pixelschaltung
- 1001: Oxidations-Integrator
- 1002: Reduktions-Integrator
- 1003: erster Eingang
- 1004: zweiter Eingang
- 1005: dritter Eingang
- 1006: Referenzpotentials V_{WE}
- 1007: erster Eingang eines Operationsverstärkers
- 1008: Operationsverstärker
- 1009: zweiter Eingang eines Operationsverstärkers
- 1010: Arbeits-Elektrode
- 1011: Ausgang eines Operationsverstärkers
- 1012: Steuereingang
- 1013: erster regelbarer elektrischer Widerstand
- 1014: zweiter regelbarer elektrischer Widerstand
- 1015: Steueranschluss
- 1016: erster Ausgang
- 1017: zweiter Ausgang
- 1018: durch die Arbeits-Elektrode fließender Elektrodenstrom
- 1100: alternative Pixelschaltung
- 1101: Arbeitselektrode
- 1102: erster Eingang eines Operationsverstärkers
- 1103: Operationsverstärker
- 1104: zweiter Eingang eines Operationsverstärkers
- 1105: dritter Eingang der Pixelschaltung
- 1106: Referenzpotentials V_{WE}
- 1107: Spaltenauswahl-Eingang
- 1108: Zeilenauswahl-Eingang
- 1109: Ausgang eines Operationsverstärkers
- 1110: Steueranschluss
- 1111: erster regelbarer Widerstand
- 1112: Steueranschluss
- 1113: zweiter regelbarer Widerstand
- 1114: erste Stromspiegelschaltung
- 1115: erster Ausgang der Pixelschaltung
- 1116: zweite Stromspiegelschaltung
- 1117: zweiter Ausgang der Pixelschaltung
- 1118: erster Schalter
- 1119: erstes Strom-Ausgangssignal Iₒₓ
- 1120: Oxidations-Integrator
- 1121: Oxidations-Spannung Uₒₓ
- 1122: zweiter Schalter
- 1123: Reduktions-Ausgangs-Strom I_{red}
- 1124: Reduktions-Integrator
- 1125: Reduktions-Ausgangsspannung U_{red}
- 1200: alternative Pixelschaltung
- 1201: Rückkoppelkondensator
- 1202: Rücksetzschalter
- 1203: Ausgang der Pixelschaltung
- 1300: alternative Pixelschaltung
- 1301: Referenzschaltung
- 1302: Eingang
- 1303: Referenz-Arbeitselektrode
- 1304: erster Eingang eines Referenz-Operationsverstärkers
- 1305: Referenz-Operationsverstärker
- 1306: zweiter Eingang eines Referenz-Operationsverstärkers
- 1307: Ausgang eines Referenz-Operationsverstärkers
- 1308: Referenz-Kondensator
- 1309: Referenz-Rücksetzschalter
- 1310: Ausgang der Referenzschaltung
- 1311: integriertes Referenzsignal U_{ref}
- 1350: Koppelkondensator
- 1400: einfacher Schalter
- 1500: Vorladeeinheit
- 1501: Schalttransistor
- 1600: Potentiostat-Schaltung
- 1601: zweistufiger Operationsverstärker
- 1602: positiver Ausgangszweig
- 1603: ohmscher Widerstand

## Patentansprüche

1. Monolithisch integrierte Sensor-Anordnung (300) zum Erfassen von in einem Analyten möglicherweise enthaltenen Molekülen,
• mit einem Substrat;
• mit mindestens einer auf und/oder in dem Substrat angeordneten Sensor-Elektrode (301), die mit einer sensoraktiven Schicht (311) beschichtet ist, an welcher in Anwesenheit von zu erfassenden Molekülen elektrochemisch aktive Teilchen generiert werden, die mittels Erfassens eines elektrischen Sensor-Signals an der mindestens einen Sensor-Elektrode (301) erfassbar sind;
• mit mindestens einer auf und/oder in dem Substrat angeordneten zusätzlichen Elektrode (302);
• **gekennzeichnet durch** mindestens eine Vergleichs-Elektrode (302), an der ein von dem Sensor-Signal unabhängiges elektrisches Vergleichs-Signal erfassbar ist; und
• eine auf und/oder in dem Substrat integrierte Betriebsschaltung (303) zum Ansteuern der mindestens einen Sensor-Elektrode (301) und der mindestens einen zusätzlichen Elektrode (303), wobei die Betriebsschaltung (303) mindestens eine Auswerte-Einheit (303) aufweist, mittels welcher basierend auf dem Sensor-Signal und dem Vergleichs-Signal ein Sensorereignis an der mindestens einen Sensor-Elektrode (301) ermittelbar ist.

2. Monolithisch integrierte Sensor-Anordnung nach Anspruch 1,
• bei der die mindestens eine zusätzliche Elektrode zumindest eine Gegen-Elektrode und zumindest eine Referenz-Elektrode (901, 902) aufweist;
• mit einer auf und/oder in dem Substrat integrierten Potentiostatschaltung (1600) zum Bereitstellen eines vorgegebenen elektrischen Potentials.

3. Monolithisch integrierte Sensor-Anordnung nach Anspruch 1 oder 2,
bei der das Substrat ein CMOS-Chip ist.

4. Sensor-Anordnung nach einem der Ansprüche 1 bis 3, eingerichtet als Biosensor-Anordnung oder Chemosensor-Anordnung.

5. Sensor-Anordnung nach einem der Ansprüche 1 bis 4, eingerichtet als DNA-Sensor-Anordnung, als Protein-Sensor-Anordnung oder als Antikörper-Sensor-Anordnung.

6. Sensor-Anordnung (400,500) nach einem der Ansprüche 1 bis 5,bei der die Auswerte-Einheit (406, 501) derart eingerichtet ist, dass sie die Differenz zwischen dem Sensor-Signal und dem Vergleichs-Signal bildet.

7. Sensor-Anordnung (300, 400, 500) nach einem der Ansprüche 1 bis 6,
bei der die Auswerte-Einheit (303, 406, 501) einen in dem Substrat integrierten Operationsverstärker aufweist, der das Sensor-Signal und das Vergleichs-Signal verarbeitet.

8. Sensor-Anordnung (1000, 1100) nach Anspruch 7,
bei welcher der Operationsverstärker zum Integrieren von elektrischen Ladungsträgern eingerichtet ist.

9. Sensor-Anordnung nach einem der Ansprüche 1 bis 8,
bei der die mindestens eine Vergleichs-Elektrode von einer sensoraktiven Schicht frei ist.

10. Sensor-Anordnung (600) nach einem der Ansprüche 1 bis 9, bei der die mindestens eine Vergleichs-Elektrode (603) eine signalgebende Beschichtung (602) aufweist, die bei einer vorgebbaren Änderung des elektrischen Potentials vom Sensorereignis unabhängig eine vorgebbare Menge elektrochemisch aktiver Teilchen generiert.

11. Sensor-Anordnung nach einem der Ansprüche 1 bis 10, bei der die mindestens eine Sensor-Elektrode und die mindestens eine Vergleichs-Elektrode eine im Wesentlichen identische Geometrie aufweisen.

12. Sensor-Anordnung (600,700) nach einem der Ansprüche 1 bis 11,
mit einer Mehrzahl von Vergleichs-Elektroden (302, 603), wobei basierend auf dem Sensor-Signal und den Vergleichs-Signalen der Mehrzahl von Vergleichs-Elektroden ein Sensorereignis an der mindestens einen Sensor-Elektrode (301, 702) ermittelbar ist.

13. Sensor-Anordnung (300) nach einem der Ansprüche 1 bis 12, mit einem Mittel (305, 306) zum Konstanthalten der elektrischen Potentiale an der mindestens einen Sensor-Elektrode und an der mindestens einen Vergleichs-Elektrode.

14. Sensor-Anordnung nach Anspruch 13,
bei der das Mittel zum Konstanthalten der elektrischen Potentiale mindestens eine Kapazität aufweist.

15. Sensor-Anordnung (300) nach einem der Ansprüche 1 bis 14, mit einer Subtrahier-Kapazität (304) zum Bilden der Differenz aus dem Sensor-Signal und dem Vergleichs-Signal, wobei ein erster Anschluss der Subtrahier-Kapazität mit der mindestens einen Sensor-Elektrode koppelbar ist und wobei ein zweiter Anschluss der Subtrahier-Kapazität mit der mindestens einen Vergleichs-Elektrode koppelbar ist.

16. Sensor-Anordnung (700) nach einem der Ansprüche 1 bis 15,
• mit einer ersten Vergleichs-Elektrode (302), an der ein Nullsignal (Vₘᵢₙ)generierbar ist;
• mit einer zweiten Vergleichs-Elektrode (602), an der ein Vollsignal (Vₘₐₓ)generierbar ist.

17. Sensor-Anordnung nach einem der Ansprüche 1 bis 16,
mit einem Analog-/Digital-Wandler (900) zum Bilden eines digitalen Ausgangssignals basierend auf dem Sensor-Signal und dem Vergleichs-Signal.

18. Sensor-Anordnung nach Anspruch 16 und 17,
bei dem das Nullsignal und das Vollsignal das obere und das untere elektrische Referenzpotential des Analog-/Digital-Wandlers bilden.

19. Sensor-Array,
mit einer Mehrzahl von auf und/oder in dem Substrat gebildeten Sensor-Anordnungen nach einem der Ansprüche 1 bis 18.

20. Sensor-Array nach Anspruch 19,
bei dem zumindest eine der Vergleichs-Elektroden für zumindest einen Teil der Sensor-Anordnungen gemeinsam vorgesehen ist.

21. Sensor-Array nach Anspruch 19 oder 20,
mit einer Ansteuer-Einheit, die derart eingerichtet ist, dass mit ihr selektiv eine Sensor-Anordnung, ein Teil der Sensor-Anordnungen oder alle Sensor-Anordnungen ansteuerbar ist oder sind.

22. Verfahren zum Herstellen einer monolithisch integrierten Sensor-Anordnung (300) zum Erfassen von in einem Analyten möglicherweise enthaltenen Molekülen,
bei dem
• auf und/oder in einem Substrat mindestens eine Sensor-Elektrode (301) gebildet wird, die mit einer sensoraktiven Schicht beschichtet wird, an welcher in Anwesenheit von zu erfassenden Molekülen elektrochemisch aktive Teilchen generiert werden, die mittels Erfassens eines elektrischen Sensor-Signals an der mindestens einen Sensor-Elektrode (301) erfassbar sind;
• mindestens eine zusätzliche Elektrode (302) auf und/oder in dem Substrat gebildet wird;
• mindestens eine Vergleichs-Elektrode (302) gebildet wird, wobei an der mindestens einen Vergleichs-Elektrode (302) ein von dem Sensor-Signal unabhängiges elektrisches Vergleichs-Signal erfassbar ist;
• auf und/oder in dem Substrat eine Betriebsschaltung (303) zum Ansteuern der mindestens einen Sensor-Elektrode und der mindestens einen zusätzlichen Elektrode (302) integriert wird, wobei die Betriebsschaltung (303) mindestens eine Auswerte-Einheit aufweist, mittels welcher basierend auf dem Sensor-Signal und dem Vergleichs-Signal ein Sensorereignis an der mindestens einen Sensor-Elektrode (301) ermittelbar ist.

## Claims

1. Monolithically integrated sensor assembly (300) for detecting molecules possibly contained in an analyte,
• comprising a substrate;
• comprising at least one sensor electrode (301) which is arranged on and/or in the substrate and which can be coated with a sensor-active layer (311) at which are generated electrochemically active particles in the presence of molecules to be detected, which electrochemically active particles can be detected by means of the detection of an electrical sensor signal at the at least one sensor electrode (301);
• comprising at least one additional electrode (302) which is arranged on and/or in the substrate;
• **characterized by** at least one comparison electrode (302) at which an electrical comparison signal which is independent of the sensor signal can be detected; and
• an operating circuit (303) integrated on and/or in the substrate and serving for driving the at least one sensor electrode (301) and the at least one additional electrode (303),
• the operating circuit (303) having at least one evaluation unit (303) by means of which a sensor event can be determined at the at least one sensor electrode (301) on the basis of the sensor signal and the comparison signal.

2. Monolithically integrated sensor assembly according to Claim 1,
• in which the at least one additional electrode has at least one counterelectrode and at least one reference electrode (901, 902);
• comprising a potentiostat circuit (1600) integrated on and/or in the substrate and serving for providing a predetermined electrical potential.

3. Monolithically integrated sensor assembly according to Claim 1 or 2,
in which the substrate is a CMOS chip.

4. Sensor assembly according to one of Claims 1 to 3,
set up as a biosensor assembly or chemosensor assembly.

5. Sensor assembly according to one of Claims 1 to 4,
set up as a DNA sensor assembly, as a protein sensor assembly or as an antibody sensor assembly.

6. Sensor assembly (400, 500) according to one of Claims 1 to 5,
in which the evaluation unit (406, 501) is set up in such a way that it forms a difference between the sensor signal and the comparison signal.

7. Sensor assembly (300, 400, 500) according to one of Claims 1 to 6,
in which the evaluation unit (303, 406, 501) has an operational amplifier which is integrated in the substrate and which processes the sensor signal and the comparison signal.

8. Sensor assembly (1000, 1100) according to Claim 7,
in which the operational amplifier is set up for the integration of electrical charge carriers.

9. Sensor assembly according to one of Claims 1 to 8,
in which the at least one comparison electrode is free of a sensor-active layer.

10. Sensor assembly (600) according to one of Claims 1 to 9,
in which the at least one comparison electrode (603) has a signalling coating (602) that generates a predeterminable quantity of electrochemically active particles in the case of a predeterminable change in the electrical potential, independently of the sensor event.

11. Sensor assembly according to one of Claims 1 to 10,
in which the at least one sensor electrode and the at least one comparison electrode have an essentially identical geometry.

12. Sensor assembly (600, 700) according to one of Claims 1 to 11,
comprising a plurality of comparison electrodes (302, 603), it being possible to determine a sensor event at the at least one sensor electrode (301, 702) on the basis of the sensor signal and the comparison signals of the plurality of comparison electrodes.

13. Sensor assembly (300) according to one of Claims 1 to 12, comprising a means (305, 306) for keeping constant the electrical potentials at the at least one sensor electrode and at the at least one comparison electrode.

14. Sensor assembly according to Claim 13,
in which the means for keeping constant the electrical potentials has at least one capacitance.

15. Sensor assembly (300) according to one of Claims 1 to 14, comprising a subtraction capacitance (304) for forming the difference between the sensor signal and the comparison signal, it being possible for a first terminal of the subtraction capacitance to be coupled to the at least one sensor electrode, and it being possible for a second terminal of the subtraction capacitance to be coupled to the at least one comparison electrode.

16. Sensor assembly (700) according to one of Claims 1 to 15,
• comprising a first comparison electrode (302), at which a zero signal (Vₘᵢₙ) can be generated;
• comprising a second comparison electrode (602), at which a full signal (Vₘₐₓ) can be generated.

17. Sensor assembly according to one of Claims 1 to 16,
comprising an analogue/digital converter (900) for forming a digital output signal on the basis of the sensor signal and the comparison signal.

18. Sensor assembly according to Claims 16 and 17,
in which the zero signal and the full signal form the upper and the lower electrical reference potential of the analogue/digital converter.

19. Sensor array,
comprising a plurality of sensor arrangements according to one of Claims 1 to 18 which are formed on and/or in the substrate.

20. Sensor array according to Claim 19,
in which at least one of the comparison electrodes is provided jointly for at least one portion of the sensor assemblies.

21. Sensor array according to Claim 19 or 20,
comprising a drive unit set up in such a way that it can be used to selectively drive one sensor assembly, a portion of the sensor assemblies or all of the sensor assemblies.

22. Method for producing a monolithically integrated sensor assembly (300) for detecting molecules possibly contained in an analyte,
in which
• there is formed on and/or in a substrate at least one sensor electrode (301) which is coated with a sensor-active layer at which are generated electrochemically active particles in the presence of molecules to be detected, which electrochemically active particles can be detected by means of the detection of an electrical sensor signal at the at least one sensor electrode (301);
• at least one additional electrode (302) is formed on and/or in the substrate;
• at least one comparison electrode (302) is formed, an electrical comparison signal which is independent of the sensor signal being able to be detected at the least one comparison electrode (302);
• an operating circuit (303) for driving the at least one sensor electrode and the at least one additional electrode (302) is integrated on and/or in the substrate, the operating circuit (303) having at least one evaluation unit by means of which a sensor event can be determined at the at least one sensor electrode (301) on the basis of the sensor signal and the comparison signal.

## Revendications

1. Dispositif ( 300 ) à capteur intégré monolithiquement pour détecter des molécules contenues éventuellement dans un analyte,
• comprenant un substrat ;
• comprenant au moins une électrode ( 301 ) formant capteur disposée sur et/ou dans le substrat et revêtue d'une couche ( 311 ) active en tant que capteur, sur laquelle des particules actives électrochimiquement sont produites par la présence de molécules à détecter, particules qui peuvent être détectées au moyen de la détection d'un signal électrique de capteur sur la au moins une électrode ( 301 ) de capteur ;
• comprenant au moins une électrode ( 302 ) supplémentaire disposée sur et/ou dans le substrat ;
• **caractérisé par** au moins une électrode ( 302 ) de comparaison, sur laquelle un signal électrique de comparaison indépendant du signal du capteur peut être détecté, et
• un circuit ( 303 ) de fonctionnement intégré sur et/ou dans le substrat pour commander la au moins une électrode ( 301 ) de capteur et la au moins une électrode ( 303 ) supplémentaire, dans lequel le circuit ( 303 ) de fonctionnement a au moins une unité ( 303 ) d'exploitation au moyen de laquelle, sur la base du signal du capteur et du signal de comparaison, un événement de capteur peut être déterminé sur la au moins une électrode ( 301 ) de capteur.

2. Dispositif à capteur intégré monolithiquement suivant la revendication 1,
• dans lequel la au moins une électrode supplémentaire à au moins une contre électrode et au moins une électrode ( 901, 902 ) de référence ;
• comprenant un circuit ( 1600 ) de potentiostat intégré sur et/ou dans le substrat pour mettre à disposition un potentiel électrique prescrit.

3. Dispositif à capteur intégré monolithiquement suivant la revendication 1 ou 2,
dans lequel le substrat est une puce CMOS.

4. Dispositif à capteur suivant l'une des revendications 1 à 3, agencé en dispositif à biocapteur ou en dispositif à chemiocapteur.

5. Dispositif à capteur suivant l'une des revendications 1 à 4, agencé en dispositif à capteur d'ADN, en dispositif à capteur de protéine ou en dispositif à capteur d'anticorps.

6. Dispositif à capteur ( 400, 500 ) suivant l'une des revendications 1 à 5, dans lequel l'unité ( 406, 501 ) d'exploitation est telle qu'elle forme la différence entre le signal du capteur et le signal de comparaison.

7. Dispositif à capteur ( 300, 400, 500 ) suivant l'une des revendications 1 à 6, dans lequel l'unité ( 303, 406, 501 ) d'exploitation a un amplificateur opérationnel qui est intégré dans le substrat et qui traite le signal du capteur et le signal de comparaison.

8. Dispositif à capteur ( 1000, 1001 ) suivant la revendication 7, dans lequel l'amplificateur opérationnel est conçu pour intégrer des porteurs de charge électriques.

9. Dispositif à capteur suivant l'une des revendications 1 à 8, dans lequel la au moins une électrode de comparaison est exempte d'une couche active en tant que capteur.

10. Dispositif à capteur ( 600 ) suivant l'une des revendications 1 à 9, dans lequel la au moins une électrode ( 603 ) de comparaison a un revêtement ( 602 ) donnant un signal et produisant, pour une modification pouvant être prescrite du potentiel électrique, une quantité pouvant être prescrite de particules actives électrochimiquement indépendamment de l'évènement de capteur.

11. Dispositif à capteur suivant l'une des revendications 1 à 10, dans lequel au moins une électrode de capteur et la au moins une électrode de comparaison ont une géométrie sensiblement identique.

12. Dispositif à capteur ( 600, 700 ) suivant l'une des revendications 1 à 11, comprenant une multiplicité d'électrodes ( 302, 603 ) de comparaison, dans lequel, sur la base du signal du capteur et des signaux de comparaison de la multiplicité d'électrodes de comparaison, un événement de capteur peut être déterminé sur la au moins une électrode ( 301, 702 ) de capteur.

13. Dispositif à capteur ( 300 ) suivant l'une des revendications 1 à 12, comprenant un moyen ( 305, 306 ) pour maintenir constant des potentiels électriques sur la au moins une électrode de capteur et sur la au moins une électrode de comparaison.

14. Dispositif à capteur suivant la revendication 13, dans lequel le moyen pour maintenir constant le potentiel électrique comporte au moins une capacité.

15. Dispositif à capteur ( 300 ) suivant l'une des revendications 1 à 14, comprenant une capacité ( 304 ) de soustraction pour former la différence entre le signal du capteur et le signal de comparaison, une première borne de la capacité de soustraction pouvant être reliée à la au moins une électrode de capteur et une deuxième borne de la capacité de soustraction pouvant être reliée à la au moins une électrode de comparaison.

16. Dispositif à capteur ( 700 ) suivant l'une des revendications 1 à 15,
• comprenant une première électrode ( 302 ) de comparaison sur laquelle peut être produit un signal ( Vₘᵢₙ ) nul ;
• comprenant une deuxième électrode ( 602 ) de comparaison sur laquelle peut être produit un signal ( Vₘₐₓ ) plein.

17. Dispositif à capteur suivant l'une des revendications 1 à 16, comprenant un convertisseur ( 900 ) analogique/numérique pour former un signal de sortie numérique sur la base du signal du capteur et du signal de comparaison.

18. Dispositif à capteur suivant la revendication 16 ou 17, dans lequel le signal nul et le signal plein forment le potentiel de référence électrique supérieur et le potentiel de référence électrique inférieur du convertisseur analogique/numérique.

19. Réseau de capteurs,
ayant une multiplicité de dispositifs à capteur formés sur et/ou dans le substrat suivant l'une des revendications 1 à 5.

20. Réseau de capteurs suivant la revendication 19,
dans lequel au moins l'une des électrodes de comparaison est prévue en commun pour au moins une partie des dispositifs à capteur.

21. Réseau de capteurs suivant la revendication 19 ou 20,
comprenant une unité de commande qui est telle qu'elle peut commander sélectivement un dispositif à capteur, une partie des dispositifs à capteur ou tous les dispositifs à capteur.

22. Procédé de fabrication d'un dispositif ( 300 ) à capteur intégré monolithiquement pour détecter des molécules contenues éventuellement dans un analyte,
dans lequel
• on forme sur et/ou dans un substrat au moins une électrode ( 301 ) de capteur qui est revêtue d'une couche active en tant que capteur et sur laquelle sont produites en présence de molécules à détecter des particules actives électrochimiquement qui peuvent être détectées à la au moins une électrode ( 301 ) de capteurs au moyen d'un signal électrique de capteurs ;
• on forme au moins une électrode ( 302 ) supplémentaire sur et/ou dans le substrat ;
• on forme au moins une électrode ( 302 ) de comparaison, un signal électrique de comparaison indépendant du signal du capteur pouvant être détecté sur la au moins un électrode ( 302 ) de comparaison ;
• on intègre sur et/ou dans le substrat un circuit ( 303 ) de fonctionnement, pour commander la au moins une électrode de capteur et la au moins une électrode ( 302 ) supplémentaire, le circuit ( 303 ) de fonctionnement ayant au moins une unité d'exploitation au moyen de laquelle on peut déterminer à la au moins une électrode ( 301 ) de capteur, un événement de capteur sur la base du signal du capteur et du signal de comparaison.
